# EUROPÄISCHE PATENTSCHRIFT

(11) **EP 3 583 057 B1**
(45) Veröffentlichungstag und Bekanntmachung des Hinweises auf die Patenterteilung: **23.02.2022**
(21) Anmeldenummer: 17821600.8
(22) Anmeldetag: 19.12.2017
(51) Int. Cl.: B65G 57/24, B65G 47/51

(54) **TRANSPORTVORRICHTUNG, SYSTEM ZUM STAPELN VON GEFÜLLTEN SÄCKEN, SOWIE VERFAHREN ZUM STAPELN VON GEFÜLLTEN SÄCKEN**
TRANSPORT DEVICE, SYSTEM FOR STACKING FILLED SACKS AND METHOD FOR STACKING FILLED SACKS
DISPOSITIF DE TRANSPORT, SYSTÈME D'EMPILEMENT DE SACS REMPLIS, AINSI QUE PROCÉDÉ D'EMPILEMENT DE SACS REMPLIS

(30) Priorität: 15.02.2017 DE 102017103089
(43) Veröffentlichungstag der Anmeldung: 25.12.2019
(73) Patentinhaber: Windmöller & Hölscher KG, 49525 Lengerich (DE)
(72) Erfinder: HAWIGHORST, Thomas, 49525 Lengerich (DE); IMBERG, Rafael, 49525 Lengerich (DE); RAUDE, Timo, 49525 Lengerich (DE)
(86) Internationale Anmeldenummer: PCT/EP2017/083548
(87) Internationale Veröffentlichungsnummer: WO 2018/149540

(56) Entgegenhaltungen:
- EP-A1- 2 511 204
- EP-A1- 2 939 962
- EP-A2- 0 106 019
- WO-A1-2010/012364
- WO-A2-2012/024714
- CN-A- 104 444 400
- DE-A1- 2 500 077
- DE-A1- 19 508 911
- DE-A1-102007 038 834
- FR-A1- 2 370 664
- JP-A- 2010 202 291
- US-A1- 2008 260 513

## Beschreibung

Die Erfindung betrifft eine Transportvorrichtung zum Befördern von gefüllten Säcken gemäß dem Oberbegriff des Anspruchs 1, ein System zum Stapeln von gefüllten Säcken gemäß dem Oberbegriff des Anspruchs 7 sowie ein Verfahren zum Stapeln von gefüllten Säcken gemäß dem Oberbegriff des Anspruchs 13.

Aus dem Stand der Technik ist es bekannt, Säcke mittels Fördersystemen von einer Befüllungsmaschine zu einem Palettierer zu transportieren, in welchem die gefüllten Säcke zumindest teilweise automatisch zu einem Sackstapel aufgeschichtet werden. Aufgrund der Dimensionierung der beteiligten Maschinen und/oder aufgrund von Prozessabläufen kann es dabei notwendig sein ganze Produktionshallen mittels Transportwegen zu verbinden. Üblicherweise werden die Säcke dabei zu einem Sackstapel auf einer Palette mittels mehrerer Lagen aufgeschichtet und anschließend mit einer Folie gesichert. Um die Ladungssicherung weiter zu steigern und gleichzeitig die Palette gegebenenfalls einzusparen, ist es ferner bekannt, einen palettenlosen Sackstapel vorzusehen, der zunächst mit einer Stretchhaube versehen wird, d. h. mit einer Folie, welche den üblicherweise quaderförmigen Sackstapel von 5 Seiten zumindest teilweise umgibt. Zur weiteren Sicherung kann der Sackstapel anschließend umgedreht werden, d. h. auf den Kopf gestellt werden, um eine weitere Stretchhaube vorzusehen, so dass der Sackstapel anschließend insbesondere vollständig von Folie umgeben ist. Problematisch ist dabei, dass durch das Einsparen der Palette auch Aussparungen zum Anheben des Sackstapels mit einem Gabelstapler oder dergleichen dem Sackstapel fehlen. Daher müssen, um derartige Sackstapel anzuheben, spezielle Hebevorrichtungen vorgesehen werden.

Um dies zu vermeiden ist es ferner bekannt, die zuletzt unterste Lage nicht vollständig auszubilden, so dass entsprechende Lücken entstehen, in denen ein Gabelstapler eingreifen kann. Nachteilhaft dabei ist jedoch, dass dies in einem automatischen Verfahren zum Bilden der Lagen zumindest sehr aufwendig zu realisieren ist und dabei Ungenauigkeiten entstehen können. Ferner ist es nicht mit jedem Format an gefüllten Säcken möglich, entsprechend geforderte Aussparungen vorzusehen, wenn die Logik der Anordnung der Lage dies nicht zulässt. So kann es beispielsweise bei einigen Sackformaten dazu führen, dass beim Bilden eines Lagenmusters lediglich sehr große Aussparungen vorgesehen werden müssen, so dass die Stabilität des Sackstapels insbesondere hinsichtlich eines Verkippens reduziert ist. Die FR2370664 A1 offenbart eine Transportvorrichtung bzw. ein System nach dem Oberbegriff des Anspruchs 1 bzw. 7.

Es ist daher Aufgabe der vorliegenden Erfindung voranstehende, aus dem Stand der Technik bekannte Nachteile zumindest teilweise zu beheben. Insbesondere ist es die Aufgabe der vorliegenden Erfindung, das Stapeln von gefüllten Säcken hinsichtlich der Handhabbarkeit des entstehenden Sackstapels in kostengünstiger und einfacher Art und Weise zu verbessern und/oder einen Automatisierungsgrad des Stapelns von gefüllten Säcken zu erhöhen.

Die voranstehende Aufgabe wird gelöst durch eine Transportvorrichtung mit den Merkmalen des Anspruchs 1, ein System mit den Merkmalen des Anspruchs 7 sowie ein Verfahren mit den Merkmalen des Anspruchs 13.

Weitere Merkmale und Details der Erfindung ergeben sich aus den Unteransprüchen, der Beschreibung und den Zeichnungen. Dabei gelten Merkmal und Details, die im Zusammenhang mit der erfindungsgemäßen Transportvorrichtung beschrieben worden sind, selbstverständlich auch im Zusammenhang mit dem erfindungsgemäßen System und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß weist die Transportvorrichtung zum Befördern von gefüllten Säcken eine Fördereinheit auf, durch welche zumindest ein Teil eines Förderpfades zum Befördern von gefüllten Normalsäcken von einer Aufgabestation zu einem Stapelbereich ausbildbar ist. Dabei ist ferner eine Bereitstellungseinheit vorgesehen, von welcher gefüllte Spezialsäcke in den Förderpfad einbringbar sind, so dass im Stapelbereich ein Sackstapel aus gefüllten Normalsäcken und gefüllten Spezialsäcken erstellbar ist.

Unter gefüllten Normalsäcken können dabei Säcke eines bestimmten Formats verstanden werden, welche im Sackstapel hauptsächlich bzw. in der Mehrzahl vorgesehen sind. So können die Normalsäcke beispielsweise in ihrem Format einem internen Standard entsprechen und/oder einer Normgröße an gefüllten Säcken. Insbesondere werden im Folgenden gefüllte Normalsäcke auch teilweise als Normalsäcke und gefüllte Spezialsäcke auch teilweise als Spezialsäcke bezeichnet, so dass bei ungefüllten Säcken gesondert darauf hingewiesen wird. Vorzugsweise können somit mehrere Lagen an Normalsäcken im Stapelbereich ausbildbar sein und zumindest eine Lage an Spezialsäcken. Unter Spezialsäcken werden dabei Säcke eines im Vergleich zu den Normalsäcken abgeänderten Formats verstanden, so dass aus den Normalsäcken bildbare Stapelmuster um weitere Stapelmuster erweitert werden, die durch die Spezialsäcke ausbildbar sind. Vorzugsweise können die Spezialsäcke dabei ein Volumen aufweisen, welches derart ausgestaltet ist, dass ein Gewicht einer Lage gefüllter Spezialsäcke dem Gewicht einer Lage gefüllter Normalsäcke entspricht.

Durch das Vorsehen von einem Sackstapel, der neben gefüllten Normalsäcken auch gefüllte Spezialsäcke, d. h. Säcke eines vom Format der Normalsäcke abweichenden Formates, aufweist, sind alternative Stapelmuster einer Lage gefüllter Spezialsäcke bildbar, so dass für einen palettenlosen Sackstapel in einfacher Art und Weise Aussparungen vorgesehen werden können, die dazu geeignet sind, den Sackstapel mittels eines Gabelstaplers, insbesondere mittels eines genormten Gabelstaplers, aufzunehmen. Damit ist es nicht notwendig, ein spezielles Hebezeug zum Transportieren des Sackstapels vorzusehen, da der Sackstapel dadurch Funktionen einer Palette teilweise selbst integriert. So können die entsprechenden Aussparungen als Schnittstellen angesehen werden, welche das Anheben bzw. das Transportieren des Sackstapels ermöglichen und ferner kann der Sackstapel beispielsweise mit einer Stretchhaube, insbesondere vollständig, verhüllbar sein, so dass auch eine äußere Ladungssicherung und damit eine erhöhte Stabilität in den Sackstapel eingebracht werden kann.

Dadurch, dass die Transportvorrichtung ferner die Bereitstellungseinheit aufweist, ist es möglich, die gefüllten Spezialsäcke insbesondere direkt in den Förderpfad einzubringen. Unter dem Förderpfad kann dabei eine Wegstrecke verstanden werden, welche die Normalsäcke von der Aufgabestation bis zu dem Stapelbereich zurücklegen, bevor diese gestapelt werden. Unter der Aufgabestation kann dabei beispielweise eine Sackbefüllungsanlage verstanden werden, welche ein Produkt in die Säcke einbringt und insbesondere die Säcke verschließt. Ferner kann die Aufgabestation ein Lager an bereits vorgefertigten, gefüllten Normalsäcken umfassen, so dass diese vom Lager lediglich zum Weitertransport an der Transportvorrichtung aufgegeben werden, d. h. in den Förderpfad eingebracht werden. Der Stapelbereich kann dabei ein Ort mit einer Fläche sein, welche dazu vorgesehen ist, darauf den Sackstapel auszubilden. Vorzugsweise kann der Stapelbereich Teil einer Stapeleinheit zum automatischen Stapeln der Säcke sein. In der Stapeleinheit kann dabei ebenfalls ein Teil des Förderpfades verlaufen. Somit ist die Bereitstellungseinheit vorzugsweise direkt an der Fördereinheit der Transportvorrichtung und/oder einer Stapeleinheit angeordnet. Insbesondere kann sich der Stapelbereich zumindest teilweise oder vollständig innerhalb der Stapeleinheit erstrecken. Unter der Bereitstellungseinheit wird eine Vorrichtung zum automatischen Einbringen der gefüllten Spezialsäcke in den Förderpfad verstanden. Dabei können an der Bereitstellungseinheit werden die Spezialsäcke direkt befüllt werden und anschließend in den Förderpfad eingebracht. Zusätzlich oder alternativ kann die Bereitstellungseinheit ein Lager für gefüllte Spezialsäcke aufweisen, von welchem aus die gefüllten Spezialsäcke automatisch oder manuell in den Förderpfad und/oder die Transportvorrichtung einbringbar sind.

Dadurch, dass durch die Bereitstellungseinheit ein Einbringen der gefüllten Spezialsäcke in den Förderpfad möglich ist, können diese in einen automatisierten Stapelprozess eingefügt werden. So kann das Einbringen der Spezialsäcke beispielsweise in regelmäßigen Abständen oder auf Anforderung, insbesondere einer Steuereinheit, vorgesehen sein. Daraufhin kann es ermöglicht sein, die gefüllten Spezialsäcke ähnlich der gefüllten Normalsäcke durch eine Stapeleinheit im Stapelbereich aufzuschichten. Dadurch ist eine hohe Lagengenauigkeit im Vergleich zu einer manuellen Aufschichtung sowie die Einsparung von Kosten möglich. Durch die Einbindung der gefüllten Spezialsäcke in den insbesondere normalen Stapelprozess kann somit beim Stapeln vorgesehen sein, dass die beteiligten Maschinen weiter laufen und nicht oder nur geringfügig gestoppt werden müssen. Vorzugsweise kann die Transportvorrichtung dabei dazu ausgebildet sein, die gefüllten Säcke von einer ersten Produktionshalle in eine zweite Produktionshalle zu befördern. Dadurch kann eine höhere Unabhängigkeit einer Dimensionierung der Stapeleinheit und/oder der Aufgabestation von einer gegebenen Größe der Produktionshallen erreicht werden. Ferner kann auch die Bereitstellungseinheit in der ersten Produktionshalle angeordnet sein, so dass die Materialzufuhr zur Herstellung der Säcke zumindest im Wesentlichen an einem Ort konzentriert sein kann, so dass Lagerkosten verringert und die Produktivität gesteigert sein kann.

Im Rahmen der Erfindung ist ferner denkbar, dass die gefüllten Spezialsäcke in einer Zwischenspeichereinheit lagerbar sind, wobei die Zwischenspeichereinheit derart an der Fördereinheit angeordnet ist, dass die gefüllten Spezialsäcke der Zwischenspeichereinheit vom Förderpfad zuführbar sind. Vorzugsweise kann dabei die Zwischenspeichereinheit der Bereitstellungseinheit in einer Beförderungsrichtung der gefüllten Normalsäcke nachgeordnet sein, d. h. im Prozess hinter der Bereitstellungseinheit vorgesehen sein. Dadurch ist es beispielsweise möglich, die Spezialsäcke unabhängig von einem Bedarf der Spezialsäcke im Stapelbereich in regelmäßigen oder unregelmäßigen Abständen in den Förderpfad einzubringen, ohne dass die Spezialsäcke unmittelbar im Stapelbereich verarbeitet werden. So können diese dem Förderpfad nach einer bestimmten Wegstrecke wieder entnommen werden und in der Zwischenspeichereinheit zwischengelagert werden. Vorzugsweise können in der Zwischenspeichereinheit mehrere gefüllte Spezialsäcke lagerbar sein. Besonders bevorzugt kann die Zwischenspeichereinheit zur Aufnahme mindestens einer Anzahl an gefüllten Spezialsäcken ausgelegt sein, welche zum Bilden einer Lage gefüllter Spezialsäcke erforderlich ist. Insbesondere kann die Zwischenspeichereinheit auch als ein sich bewegender Speicher ausgebildet sein, auf welchem die gefüllten Spezialsäcke einen stetigen oder unstetigen Vortrieb erfahren können. Vorzugweise kann dieser Vortrieb langsamer ausgestaltet sein, als ein Vortrieb der Fördereinheit. Insbesondere kann die Zwischenspeichereinheit somit ebenso wie die Fördereinheit ein Fördermittel aufweisen. Dadurch kann das Zwischenspeichern der gefüllten Spezialsäcke in einfacher Art und Weise insbesondere gleichzeitig mit einer Beförderung der Spezialsäcke entlang einer Wegstrecke vorgesehen sein.

Ferner ist es bei einer erfindungsgemäßen Transportvorrichtung denkbar, dass die Zwischenspeichereinheit zur Lagerung der gefüllten Spezialsäcke in einer Ebene ausgebildet ist. So kann die Zwischenspeichereinheit beispielsweise ein Transportband und/oder einen Rollenförderer aufweisen. Unter der Lagerung in einer Ebene kann daher verstanden werden, dass die Spezialsäcke z. B. hintereinander und nicht in der Höhe gelagert werden. Durch die Lagerung in der Ebene ist es daher in einfacher Art und Weise möglich, die gefüllten Spezialsäcke der Zwischenspeichereinheit zuzuführen und von der Zwischenspeichereinheit wieder dem Förderpfad zuzuführen. Somit ist es nicht notwendig hier entsprechende Stapel oder gar Stapelmuster vorzusehen. Auch eine Vereinzelung der gefüllten Spezialsäcke ist nicht notwendig oder kann sehr einfach ausgestaltet sein. So kann beispielsweise ein Schieber vorgesehen sein, welcher in der Ebene wirkt, in welcher die gefüllten Spezialsäcke in der Zwischenspeichereinheit lagerbar sind, um die gefüllten Spezialsäcke von der Zwischenspeichereinheit zum Förderpfad oder vom Förderpfad zur Zwischenspeichereinheit zu befördern. Durch die Lagerung in einer Ebene ist dabei eine Vereinzelung nicht weiter notwendig. Vorzugsweise kann ein erster Schieber an einem ersten Ende der Zwischenspeichereinheit und ein zweiter Schieber an einem zweiten Ende der Zwischenspeichereinheit vorgesehen sein, um die gefüllten Spezialsäcke zu verarbeiten. Dadurch kann der Transport und damit das Stapeln insgesamt in kostengünstiger Art und Weise durchgeführt und dabei insbesondere automatisiert sein.

Vorteilhafterweise können bei einer erfindungsgemäßen Transportvorrichtung die gefüllten Spezialsäcke von der Zwischenspeichereinheit direkt an die Stapeleinheit oder an die Fördereinheit in den Förderpfad übergebbar sein. So kann die Zwischenspeichereinheit direkt an der Stapeleinheit und/oder direkt an der Fördereinheit angeordnet sein, um eine zuverlässige Übergabe der Spezialsäcke zu ermöglichen. Dabei kann unter der Übergabe der Spezialsäcke ein Weiterleiten verstanden werden, welches automatisch oder manuell durchführbar ist. So kann ein Roboterarm vorgesehen sein, durch welchen die Spezialsäcke greifbar sind oder ein Schieber, durch welchen die Spezialsäcke schiebbar sind. Vorzugsweise kann die Zwischenspeichereinheit zumindest an einer Seite im Bereich der Übergabe von der Zwischenspeichereinheit an die Stapeleinheit oder die Fördereinheit erhöht ausgebildet sein, so dass die Säcke von der Zwischenspeichereinheit auf die Folgestation fallen können. Eine direkte Übergabe an die Stapeleinheit bietet den Vorteil, dass dies kurz vor dem Stapelbereich vorgesehen sein kann, so dass eine weitere Beförderung der Spezialsäcke verkürzt ist und damit ein Risiko einer Beschädigung der Spezialsäcke reduziert sein kann. Eine direkte Übergabe an die Fördereinheit hingegen bietet den Vorteil, dass die Spezialsäcke wie Normalsäcke in die Stapeleinheit eingebracht werden können und es somit möglich ist, dass die Stapeleinheit keinen zusätzlichen Übergabebereich mit der Zwischenspeichereinheit aufweist. Ferner kann auch ein Ausbilden von Stapellagen dadurch vereinfacht sein. Dennoch kann das Risiko, einen Bruch der Spezialsäcke nicht oder erst im Stapelbereich zu erkennen insgesamt durch die Zwischenspeichereinheit reduziert sein. So kann die Zwischenspeichereinheit beispielsweise ein optisches Erfassungsmittel aufweisen, um defekte Spezialsäcke zu erkennen, so dass z.B. bei einer Bedarfsmeldung die defekten Spezialsäcke berücksichtigt, insbesondere aussortiert werden können.

Es ist im Rahmen der vorliegenden Erfindung ferner denkbar, dass eine Steuereinheit vorgesehen ist, durch welche ein Bedarf an gefüllten Spezialsäcken im Stapelbereich erkennbar ist. Unter dem Bedarf kann dabei beispielsweise verstanden werden, dass ausreichend Lagen an gefüllten Normalsäcken im Stapelbereich ausgebildet sind und daraufhin eine Lage an Spezialsäcken gebildet werden soll. So kann die Steuereinheit vorzugsweise mit der Bereitstellungseinheit und/oder der Zwischenspeichereinheit in Kommunikationsverbindung stehen bzw. diese ansteuern. Erkennt die Steuereinheit dann einen Bedarf an gefüllten Spezialsäcken, kann die Steuereinheit beispielsweise ein Signal an die Zwischenspeichereinheit geben bzw. die Zwischenspeichereinheit ansteuern, so dass ausreichend gefüllte Spezialsäcke von der Zwischenspeichereinheit in den Förderpfad eingebracht werden, um eine Lage an gefüllten Spezialsäcke zu bilden. Somit ist ein weiterer Grad an Automatisierung durch die Steuereinheit erreichbar. Insbesondere ist auch der manuelle Überwachungsaufwand der Transportvorrichtung durch die Steuereinheit reduziert, da diese Teile des Verfahrens automatisch ansteuern kann.

Im Rahmen der Erfindung ist ferner denkbar, dass die Steuereinheit derart ausgebildet ist, dass der Bedarf an gefüllten Spezialsäcken auslösbar ist, wenn ein vordefinierter Sollparameter im Stapelbereich erreicht ist. Unter dem vordefinierten Sollparameter kann beispielsweise ein Gewicht der bereits aufgestapelten Säcke, eine Anzahl der bereits aufgestapelten Säcke oder dergleichen vorgesehen sein. Besonders bevorzugt kann der Sollparameter eine bereits gestapelte Anzahl an Lagen von Normalsäcken im Stapelbereich umfassen. Dadurch kann eine Abhängigkeit von der Anzahl der Säcke reduziert sein, insbesondere da während der Beförderung der Säcke zum Stapelbereich einzelner Säcke gegebenenfalls platzen können, was dazu führen kann, dass eine Anzahl tatsächlich gestapelter Säcke nicht mit der Anzahl der beförderten Säcke übereinstimmt. Vorzugsweise kann die Steuereinheit einen Mikroprozessor, einen Computer, Server oder dergleichen aufweisen, um die beschriebenen Funktionen zu realisieren.

Im Rahmen der Erfindung kann ferner vorgesehen sein, dass an der Fördereinheit und/oder an der Zwischenspeichereinheit eine Sensoreinheit angeordnet ist, durch welche die gefüllten Spezialsäcke erkennbar sind. Dadurch kann es möglich sein, die bereits in den Förderpfad eingebrachten gefüllten Spezialsäcke von gefüllten Normalsäcken zu unterscheiden, so dass bei einer Erkennung eines gefüllten Spezialsackes durch die Sensoreinheit ein Schieber aktivierbar sein kann, welcher den erkannten, gefüllten Spezialsack auf die Zwischenspeichereinheit schiebt. Somit kann eine Sortierung von chaotisch kombinierten gefüllten Spezialsäcke und gefüllten Normalsäcken durchführbar sein. Die Sensoreinheit kann dazu mechanisch und/oder optisch ausgebildet sein. So kann die Sensoreinheit beispielsweise einen mechanischen Schalter umfassen, welcher nur bei einer bestimmten Größe eines Sackformates ausgelöst wird. Vorzugsweise kann die Sensoreinheit optisch ausgebildet sein und beispielsweise eine Lichtschranke und/oder eine Kamera aufweisen, durch welche die Spezialsäcke und/oder die Normalsäcke erkennbar und/oder erfassbar sein können. Dazu kann die Sensoreinheit in der Fördereinheit und/oder an der Zwischenspeichereinheit angeordnet sein, um die Spezialsäcke im Beförderungspfad zu erkennen. Vorzugsweise kann ferner eine Erkennungseinheit vorgesehen sein, durch welche ein Einbringen der gefüllten Spezialsäcke von der Zwischenspeichereinheit in den Beförderungspfad überwachbar ist. Die Erkennungseinheit kann dazu vorzugsweise eine Kamera umfassen.

Im Rahmen der Erfindung ist es ferner denkbar, dass die Bereitstellungseinheit, die Fördereinheit und/oder die Zwischenspeichereinheit ein Transportband und/oder einen Rollenförderer umfasst. Ein Transportband bzw. ein Rollenförderer stellen einfache Möglichkeiten dar, eine Beförderung der gefüllten Spezialsäcke bzw. Normalsäcke zu realisieren, wobei diese gleichzeitig noch eine hohe Zugänglichkeit aufweisen, um beispielsweise Fehler, insbesondere manuell erkennen zu können und/oder die Säcke an einer Folgestation zu verarbeiten. So kann beispielsweise die Bereitstellungseinheit ein Transportband und/oder einen Rollenförderer auch dann umfassen, wenn die Bereitstellungseinheit zum Befüllen der Spezialsäcke ausgebildet ist. Insbesondere können die Spezialsäcke zunächst befüllt werden können und anschließend auf ein Transportband und/oder einen Rollenförderer gegeben werden können, um zur Fördereinheit transportiert zu werden.

Ferner kann bei einer erfindungsgemäßen Transportvorrichtung vorgesehen sein, dass die Bereitstellungseinheit ein umlaufendes Fördermittel aufweist. Dabei kann die Bereitstellungseinheit vorzugsweise einen Aufgabebereich zur Aufnahme der gefüllten Spezialsäcke, insbesondere durch die Bereitstellungseinheit, und zumindest einen ersten Abgabebereich zur Übergabe der gefüllten Spezialsäcke in den Förderpfad umfassen. Unter einem umlaufenden Fördermittel kann ein beispielsweise ringartig, oval oder kreisförmig verlaufendes Fördermittel verstanden werden. So kann das Fördermittel beispielsweise ein Endlosband aufweisen, welches die Spezialsäcke so lange im Kreis befördern kann, bis diese am Abgabebereich benötigt werden. Dadurch ist es zum einen möglich, mehrere Stapelbereiche mit Spezialsäcken, unabhängig von den gefüllten Normalsäcken, zu versorgen. Zum anderen ist es durch das umlaufende Fördermittel möglich, mehrere Spezialsäcke in der Bereitstellungseinheit zwischenzulagern. Ferner können Spezialsäcke, welche nicht an dem Abgabebereich benötigt werden an einem weiteren Abgabebereich bereitgestellt werden oder zunächst vom ersten Abgabebereich wieder abgeführt werden und erst bei Bedarf dort abgenommen werden. Unter dem Abgabebereich kann insbesondere ein Abgabeort verstanden werden, an dem beispielsweise eine Vorrichtung angeordnet sein kann, durch welche die Spezialsäcke von der Bereitstellungseinheit in den Förderpfad eingegeben werden können. Am Aufgabebereich kann ferner vorgesehen sein, die Spezialsäcke in die Bereitstellungseinheit einzugeben bzw. zur Weiterbeförderung aufzugeben. So kann beispielsweise am Aufgabebereich eine Spezialaufgabestation vorgesehen sein, welche die Spezialsäcke befüllt und anschließend an die Bereitstellungseinheit übergibt.

Vorzugsweise kann bei einer erfindungsgemäßen Transportvorrichtung ferner vorgesehen sein, dass die Bereitstellungseinheit zumindest einen zweiten Abgabebereich aufweist. So kann die Bereitstellungseinheit beispielsweise ein weiteres Fördermittel mit Spezialsäcken bedienen. Dadurch kann es ausreichend sein, eine Bereitstellungseinheit für mehrere Stapelbereiche vorzusehen, an denen Spezialsäcke benötigt werden. Dadurch kann die Produktivität der gesamten Anlage weiter gesteigert werden. Ferner ist es dadurch nicht notwendig, mehr als einen Aufgabebereich an der Bereitstellungseinheit vorzusehen, da die Spezialsäcke umlaufend weiter transportiert werden können. Vorzugsweise kann dabei am ersten Abgabebereich vorgesehen sein, dass gefüllte Spezialsäcke eines ersten Formats in den Förderpfad einbringbar sind und am zweiten Abgabebereich gefüllte Spezialsäcke eines zweiten Formats und/oder des ersten Formats in einen weiteren Förderpfad einbringbar sind. So kann beispielsweise am ersten und am zweiten Abgabebereich jeweils eine Sensoreinheit vorgesehen sein, durch welche die Spezialsäcke erkennbar sind und entsprechend ihres Formats dem ersten Abgabebereich zuordnet oder diese beispielsweise zum zweiten Abgabebereich auf der Bereitstellungseinheit weiter befördern werden können, so dass die gefüllten Spezialsäcke am zweiten Abgabebereich erneut erkannt werden und dort weiter verarbeitet werden können. Somit kann durch ein und dieselbe Bereitstellungseinheit vorgesehen sein, dass mehrere Abgabebereiche mit unterschiedlichen Spezialsäcken versorgt werden, ohne dass es notwendig ist, jeweils eine einzelne Bereitstellungseinheit für jeden Abgabebereich vorzusehen. Dabei ist es denkbar, dass gefüllte Spezialsäcke unterschiedlicher Formate in der Bereitstellungseinheit speicherbar sind.

Im Rahmen der Erfindung ist ferner denkbar, dass die Transportvorrichtung eine weitere Fördereinheit aufweist, an welcher zumindest eine weitere Stapeleinheit zum Erstellen eines weiteren Sackstapels anordbar ist. Vorzugsweise können mehrere weitere Stapeleinheiten anordbar sein oder vorgesehen sein, welche zum Erstellen eines Sekundärstapels, eines Tertiärstapels und weiterer Stapel ausgebildet sein können. Der weitere Sackstapel kann dabei ebenfalls aus Normalsäcken und Spezialsäcken ausgebildet sein oder aus Sekundärsäcken und Spezialsäcken. Dadurch ist z.B. eine weitere Produktionslinie zum Stapeln gefüllter Säcke durch die bedienbar, welche mit der Transportvorrichtung zusammenhängt. Vorzugsweise kann dabei die Bereitstellungseinheit eine umlaufende Bereitstellungseinheit sein, um sämtliche Sackstapel mit Spezialsäcken zu versorgen. Insbesondere können Sekundär- und Tertiärsäcke Säcke sein, welche ein anderes Format aufweisen, als die Normalsäcke. Somit ist es insbesondere möglich, parallel unterschiedliche Produktlinien mit der gleichen Transportvorrichtung herzustellen.

Gemäß einem weiteren Aspekt der Erfindung ist ein System zum Stapeln von gefüllten Säcken beansprucht. Das System weist eine Aufgabestation auf, durch welche gefüllte Normalsäcke in einen Förderpfad zur Beförderung der gefüllten Normalsäcke von der Aufgabestation zu einem Stapelbereich einbringbar sind. Ferner weist das System eine Transportvorrichtung, insbesondere eine erfindungsgemäße Transportvorrichtung, auf, welche an der Aufgabestation angeordnet ist, so dass durch eine Fördereinheit der Transportvorrichtung zumindest ein Teil des Förderpfades ausgebildet ist. Weiterhin weist das System eine an der Transportvorrichtung angeordnete Stapeleinheit auf, durch welche ein Sackstapel erstellbar ist. Zudem weist die Transportvorrichtung weiterhin eine Bereitstellungseinheit auf, von welcher gefüllte Spezialsäcke in den Förderpfad einbringbar sind, so dass im Stapelbereich der Sackstapel aus gefüllten Normalsäcken und gefüllten Spezialsäcken erstellbar ist.

Damit bringt ein erfindungsgemäßes System die gleichen Vorteile mit sich, wie sie bereits ausführlich mit Bezug auf eine erfindungsgemäße Transportvorrichtung beschrieben worden sind. Durch die Stapeleinheit kann ferner ein automatisches Stapeln der gefüllten Säcke im Stapelbereich vorgesehen sein. Insbesondere kann die Stapeleinheit als Palettierer ausgeführt sein, der zum palettenlosen Stapeln und/oder zum Stapeln auf einer Palette ausgebildet ist. Vorzugsweise ist der Förderpfad durch die Fördereinheit und die Stapeleinheit gebildet. So kann es beispielsweise vorgesehen sein, dass die gefüllten Säcke von der Fördereinheit auf die Stapeleinheit geschoben werden oder auf die Stapeleinheit fallen. Um hier zum Stapelbereich weiter befördert zu werden, kann ein weiterer Teil des Förderpfades erforderlich sein.

Es ist im Rahmen der vorliegenden Erfindung ferner denkbar, dass die Aufgabestation eine Befüllungsvorrichtung aufweist, durch welche zuvor ungefüllte Normalsäcke befüllbar sind. Somit kann die Aufgabestation zum Verarbeiten von ungefüllten Normalsäcken ausgebildet sein. Vorzugsweise kann die Aufgabestation dabei dazu ausgebildet sein, Folie zu Säcken zu verarbeiten, die Säcke zu befüllen und anschließend zu verschließen. Dadurch kann die Aufgabestation eine zumindest teilweise oder vollständig automatisierte Verarbeitungseinheit darstellen, so dass der gesamte Prozess von der Befüllung der Normalsäcke bis zum Stapeln zu einem Sackstapel weiter automatisierbar ist. Dadurch können Kosten eingespart werden und eine Reproduzierbarkeit eines Prozesses gewährleistet sein. So kann die Befüllungsvorrichtung vorzugsweise eine Schweißeinheit aufweisen, um Folie zu Säcken zu verarbeiten und/oder befüllte Säcke zu verschließen.

Dabei ist ferner denkbar, dass zumindest eine weitere Aufgabestation, durch welche Sekundärsäcke befüllbar sind, und/oder zumindest eine weitere Stapeleinheit zum Erstellen eines weiteren Sackstapels an der Transportvorrichtung angeordnet ist. Vorzugsweise kann die weitere Aufgabestation und/oder die weitere Stapeleinheit dabei an der weiteren Fördereinheit angeordnet sein. Somit können mehrere unterschiedliche Aufgabestationen, welche parallel gefüllte Säcke herstellen, und/oder Stapeleinheiten, welche parallel gefüllte Säcke stapeln, vorgesehen sein, so dass die Produktivität des Systems gesteigert sein kann. Gleichzeitig kann dieselbe Transportvorrichtung dazu eingesetzt werden, so dass sich hier eine weitere Kostenersparnis ergeben kann.

Es ist im Rahmen der Erfindung ferner denkbar, dass die Transportvorrichtung und/oder die Stapeleinheit eine Steuereinheit aufweist, durch welche ein Bedarf an gefüllten Spezialsäcken im Stapelbereich erkennbar ist. Insbesondere kann eine zentrale Steuereinheit für das gesamte System bereitgestellt sein, in welcher z.B. mehrere Steuergeräte der Transportvorrichtung und der Stapeleinheit zumindest in Bezug auf einen Datenaustausch zusammengeschlossen sein können. Vorzugsweise kann die Steuereinheit derart ausgebildet sein, dass der Bedarf an gefüllten Spezialsäcken auslösbar ist, wenn ein vordefinierter Sollparameter im Stapelbereich erreicht ist.

Im Rahmen der Erfindung ist ferner denkbar, dass an der Bereitstellungseinheit der Transportvorrichtung eine Spezialaufgabestation zum Befüllen zuvor ungefüllter Spezialsäcke und/oder zum Einbringen der gefüllten Spezialsäcke in die Bereitstellungseinheit angeordnet ist. Durch das Vorsehen der Spezialaufgabestation kann es nicht erforderlich sein, die Aufgabestation zum Befüllen der Normallsäcke auf Spezialsäcke umzustellen und/oder gefüllte Spezialsäcke vorzuproduzieren und in der Bereitstellungseinheit in entsprechender Menge vorzulagern. So kann die Bereitstellungseinheit direkt die Spezialsäcke befüllen und bei entsprechendem Bedarf oder bei entsprechender Taktung in den Förderpfad einbringen. Auch das Erstellen der gefüllten Spezialsäcke kann dadurch automatisiert sein, so dass hier manuelle Tätigkeiten reduziert sein können und damit weitere Kosten eingespart sein können. Ferner kann die Reproduzierbarkeit des Verfahrens zum Stapeln der Säcke weiter gesteigert sein.

Im Rahmen der Erfindung kann ferner vorgesehen sein, dass die Stapeleinheit ein Wendemittel aufweist, durch welches der Sackstapel derart drehbar ist, dass eine zuvor oberste Lage des Sackstapels nach der Drehung durch das Wendemittel eine unterste Lage des Sackstapels bildet. Somit kann der Sackstapel durch das Wendemittel auf den Kopf gestellt werden und dadurch von der Oberseite und der Unterseite mit einer Folie umhüllt werden. Darüber hinaus kann somit die Lage der gefüllten Spezialsäcke in Abhängigkeit der Anzahl der Lagen an gefüllten Normalsäcken als letztes in den Sackstapel eingebracht werden, so dass anschließend die Lage der Spezialsäcke die unterste Lage des Sackstapels bildet und damit durch die Spezialsacklage entstehende Aussparungen zum Anheben des Sackstapels an der Unterseite entstehen.

Bei einem erfindungsgemäßen System kann die Stapeleinheit ferner vorteilhafterweise eine Umhüllungsvorrichtung aufweisen, durch welche der Sackstapel zumindest teilweise mit einer Folie verhüllbar ist. Vorzugsweise kann die Folie eine Stretchhaube sein. Somit ist eine weitere Ladungssicherung in den Sackstapel einbringbar, so dass dieser auch beim Wenden und weiteren Transportieren stabil bleibt. Darüber hinaus ist durch eine Stretchhaube beispielsweise eine Sicherung der gefüllten Säcke des Sackstapels gegenüber Umwelteinflüssen schützbar.

Ferner ist es bei einem erfindungsgemäßen System denkbar, dass die Stapeleinheit eine Schiebevorrichtung aufweist, durch welche ein Teil des Förderpfades gebildet ist, wobei die Schiebevorrichtung einen Schieber aufweist, durch welchen die gefüllten Säcke von einer Schiebefläche auf einen Schiebetisch beförderbar sind. Um eine präzise Lagenausbildung gewährleisten zu können, ist es vorteilhaft, eine solche Schiebevorrichtung vorzusehen. So bietet dies die Möglichkeit in einfacher Art und Weise die gefüllten Säcke von der Transportvorrichtung auf die Schiebefläche zu befördern, von welcher aus die gefüllten Säcke entsprechend in Richtung des Schiebetisches, welcher sich vorzugsweise im Stapelbereich befindet, befördert werden. Dabei weist der Schiebetisch vorzugsweise zwei Tischelemente auf, welche aufklappbar oder auseinander schiebbar sind, sodass gefüllte Säcke, welche auf dem Schiebetisch liegen, herunterfallen und damit eine Lage des Sackstapels ausbilden. Unterhalb des Schiebetisches kann eine Hubvorrichtung angeordnet sein, welche dazu ausgebildet ist, die bereits aufgeschichteten Lagen abzusenken, so dass ausreichend Raum für weitere Lagen unterhalb des Schiebetisches zur Verfügung steht und gleichzeitig eine Fallhöhe für nachfolgende Lagen nicht zu groß wird. Vorzugsweise kann die Schiebevorrichtung dazu ferner Führungsmittel aufweisen, welche beim Schieben der Säcke die Säcke entsprechend des gewünschten Lagenbildes leiten. Vorzugsweise weist der Förderpfad an der Schiebevorrichtung einen 90° Winkel auf, sodass Bauraum in Bezug auf die Länge des Gesamtsystems eingespart werden kann und der Stapelort einfach zugänglich ist. Die Schiebevorrichtung bildet ein weiteres Funktionselement, das zu einem hohen Automatisierungsgrad des Systems führen oder beitragen kann.

Gemäß einem weiteren Aspekt der Erfindung ist ferner ein Verfahren zum Stapeln von gefüllten Säcken zu einem Sackstapel beansprucht. Dabei umfasst das Verfahren die folgenden Schritte:
- Einbringen von gefüllten Normalsäcken in einen Förderpfad zur Beförderung der gefüllten Normalsäcke von einer Aufgabestation zu einem Stapelbereich,
- Transportieren der gefüllten Normalsäcke entlang eines Teils des Förderpfades zu dem Stapelbereich durch eine Transportvorrichtung,
- Ausbilden einer ersten Lage aus mindestens zwei Reihen von gefüllten Normalsäcken im Stapelbereich,
- Ausbilden zumindest einer zweiten Lage aus zumindest zwei Reihen von gefüllten Normalsäcken auf der ersten Lage,
- Einbringen von zumindest einem Spezialsack in den Förderpfad,
- Ausbilden einer Speziallage aus zumindest einem Spezialsack im Stapelbereich

Vorzugsweise kann die Transportvorrichtung eine erfindungsgemäße Transportvorrichtung sein. Damit bringt ein erfindungsgemäßes Verfahren die gleichen Vorteile mit sich, wie sie ausführlich in Bezug auf eine erfindungsgemäße Transportvorrichtung beschrieben worden sind. Dadurch ist im Stapelbereich in einfacher Art und Weise ein Sackstapel aus gefüllten Normalsäcken und gefüllten Spezialsäcken erstellbar. Das Ausbilden der ersten und/oder zweiten Lage kann ein Zurücklegen eines weiteren Teils des Förderpfades umfassen. So kann vorgesehen sein, dass die Säcke vom Eingang einer Stapeleinheit zum Stapelort geschoben oder anderweitig befördert werden. Vorzugsweise können ferner noch weitere Lagen von Normalsäcken auf der zweiten Lage ausgebildet werden. Vorzugsweise kann das Verfahren ferner zumindest einen der folgenden Schritte umfassen:
- Befüllen von Normalsäcken und/oder
- Befüllen von Spezialsäcken.

Vorzugsweise kann das Befüllen von Normalsäcken und/oder das Befüllen von Spezialsäcken automatisiert durchgeführt werden. Dadurch ist ein hoher Automatisierungsgrad des Verfahrens erreichbar. Ferner kann somit durch das Verfahren eine insbesondere vollständige Verarbeitungslinie von der Befüllung der Säcke bis zum Ausbilden des Sackstapels vorgesehen sein. Wie bereits beschrieben, ist durch die Spezialsäcke die Möglichkeit gegeben, aus Normalsäcken bildbare Stapelmuster um weitere Varianten von Stapelmustern zu erweitern und durch Erstellen einer Lage der Spezialsäcke die Handhabbarkeit des fertigen Sackstapels zu verbessern.

Im Rahmen der Erfindung kann ferner vorgesehen sein, dass das Verfahren folgenden Schritt umfasst:
- Wenden der ausgebildeten Lagen des Sackstapels, sodass eine zuvor oberste Lage nach dem Wenden eine unterste Lage des Sackstapels bildet.

Dadurch ist es möglich, dass der Sackstapel von beiden Seiten behandelt wird. So können zusätzliche Ladungssicherungen vorgesehen sein, welche den Sackstapel sowohl in Bezug auf die unterste, als auch auf die oberste Lage stützen. Das Wenden der ausgebildeten Lagen kann vorzugsweise durch ein Wendemittel einer Stapeleinheit durchgeführt werden. Vorzugsweise wird das Wenden der ausgebildeten Lagen daher automatisiert durchgeführt. So kann vorzugsweise eine Kraft auf die oberste und die unterste Lage aufgebracht werden, sodass der Sackstapel durch Zusammendrücken eine Stabilität erfährt, welche ausreicht, um den Sackstapel kurzzeitig in die Horizontale zu kippen und anschließend auf den Kopf zu stellen. Dadurch kann z.B. die Position einer Spezialsacklage in Relation zur Aufstandsfläche des Sackstapels verändert werden.

Vorteilhafterweise kann bei einem erfindungsgemäßen Verfahren die Speziallage als eine letzte Lage des Sackstapels ausgebildet werden. Daher kann die Speziallage die oberste Lage bilden, welche nach dem Wenden zur untersten Lage des Sackstapels wird. Somit ist es möglich, die untersten Lagen beim Stapeln zunächst aus Normalsäcken vorzusehen, sodass eine maximale Stabilität des Sackstapels beim Stapeln erhalten bleibt. Wird daraufhin als letzte Lage die Speziallage aufgebracht, welche weniger Aufstandsfläche für den Sackstapel bildet, steht der Sackstapel zunächst weiterhin auf den Lagen der Normalsäcke. Daraufhin kann der Sackstapel eine erste Ladungssicherung erfahren, welche die Speziallage und die Normallagen verbindet. Wird daraufhin der Sackstapel gewendet, steht zwar erneut die Speziallage als unterste Lage auf dem Stapelbereich insbesondere auf den Boden auf, jedoch hat der Sackstapel bereits eine zusätzliche Sicherung erfahren und ist im fertig gestapelten Zustand ferner dynamischen Lasten eines Aufbringens weiterer Lagen nicht ausgesetzt, so dass entsprechend eine Instabilität in Bezug auf Kippen des Sackstapels reduziert ist. Daraufhin kann vorzugsweise eine weitere Ladungssicherung erfolgen, um die Handhabbarkeit des Sackstapels weiter zu erhöhen. Insbesondere können die Spezialsäcke derart ausgebildet sein, dass ein Gewicht der Speziallage einem Gewicht der ersten Lage entspricht. Dadurch ist eine Vereinfachung der Handhabung des Sackstapels gegeben, da die Menge des enthaltenden Produktes in den gefüllten Säcken einfacher abgeschätzt werden kann. Insbesondere kann die Speziallage fünf Spezialsäcke umfassen, um eine hohe Kippstabilität des Sackstapels zu gewährleisten.

Vorzugsweise kann bei einem erfindungsgemäßen Verfahren ferner vorgesehen sein, dass das Verfahren folgenden Schritt umfasst:
- Umhüllen des Sackstapels mit einer Folie.

Vorzugsweise kann dabei der Sackstapel mit eine Stretchhaube zumindest teilweise oder vollständig umhüllt werden. Die Folie ist eine besonders kostengünstige Möglichkeit, eine Ladungssicherung des Sackstapels zu realisieren. Ferner bietet die Folie durch ihre Flexibilität diverse weitere Vorteile in der Handhabbarkeit des Sackstapels und in der Weiterverarbeitung der enthaltenden Produkte. Dabei kann die Folie transparent ausgestaltet sein, sodass eine Überprüfung der im Sackstapel gelieferten Produkte in einfacher Art und Weise möglich ist. Ferner bieten Folien, insbesondere Stretchhauben, den Vorteil, dass auch Motive, insbesondere Firmenlogos, aufgedruckt sein können, um dem Sackstapel ein höherwertiges Aussehen zu verleihen. Stretchhauben bieten darüber hinaus den Vorteil, dass diese zumindest im Wesentlichen wasserdicht sind und somit den Sackstapel vor weiteren Umwelteinflüssen schützen können. Aufgebrachte Vorspannkräfte erhöhen weiterhin die Ladungssicherung.

Vorzugsweise kann bei einem erfindungsgemäßen Verfahren ferner vorgesehen sein, dass folgende Schritte ausgeführt werden:
- Transportieren von gefüllten Sekundärsäcken entlang eines weiteren Förderpfades zu einem weiteren Stapelbereich,
- Ausbilden einer ersten Lage aus zumindest zwei Reihen von gefüllten Sekundärsäcken im weiteren Stapelbereich,
- Ausbilden zumindest einer zweiten Lage aus zumindest zwei Reihen von gefüllten Sekundärsäcken auf der ersten Lage von gefüllten Sekundärsäcken,
- Einbringen von zumindest einem Spezialsack in den weiteren Förderpfad,
- Ausbilden einer Speziallage aus zumindest einem Spezialsack im weiteren Stapelbereich.

Dadurch kann ein weiterer Stapelbereich durch gefüllte Säcke bedient werden, wobei auch hier Spezialsäcke eingebracht werden, insbesondere sodass ein Mischstapel erstellt werden kann. Die Sekundärsäcke können vorzugsweise ein den Normalsäcken gleiches oder unterschiedliches Format aufweisen. Vorzugsweise kann ferner zumindest einer der folgenden Schritte vorgesehen sein:
- Befüllen von Sekundärsäcken und/oder
- Einbringen von gefüllten Sekundärsäcken in den Förderpfad zur Beförderung der gefüllten Sekundärsäcke von einer weiteren Aufgabestation zu dem weiteren Stapelbereich.

Insbesondere kann auch das Befüllen von Sekundärsäcken automatisch durchgeführt werden. Dadurch kann der Automatisierungsgrad weiter erhöht sein. Somit kann eine zweite Produktionslinie an Säcken, des gleichen oder des unterschiedlichen Formates bereitgestellt werden, sodass die Produktivität der Gesamtanlage erhöht sein kann. Vorzugsweise kann dabei das Befüllen und/oder das Transportieren der Sekundärsäcke sowie das Ausbilden der Sekundärlagen zeitlich parallel zum Befüllen und/oder Transportieren der Normalsäcke sowie dem Ausbilden der Lagen der Normalsäcke im Stapelbereich durchgeführt werden. So ist in den meisten Fällen der Bedarf an Spezialsäcken pro Sackstapel insgesamt geringer, als der Bedarf an Normalsäcken. Daher kann es sinnvoll sein, einen weiteren Stapelbereich mit den gefüllten Spezialsäcken zu bedienen, um auch die gefüllten Spezialsäcke, insbesondere mit einer Produktionsgeschwindigkeit, die einer Produktionsgeschwindigkeit der gefüllten Normalsäcke entspricht, kontinuierlich bereitstellen zu können und dadurch gleichzeitig die Gesamtproduktivität zu erhöhen.

Vorzugsweise kann bei einem erfindungsgemäßen Verfahren der Sackstapel quaderartig ausgebildet werden und das Ausbilden der Speziallage ein derartiges Anordnen der gefüllten Spezialsäcke umfassen, dass zumindest an zwei Seiten, bevorzugt an vier Seiten des Sackstapels, jeweils eine Anhebe-Aussparung entsteht. Vorzugsweise sind die zwei Seiten gegenüberliegende Seiten. So kann vorzugsweise die Speziallage in rechteckiger oder quadratischer Form insbesondere mittig der vorangegangenen Lage aufgebracht werden, sodass die Anhebe-Aussparungen außen entstehen. Dadurch kann gewährleistet sein, dass auch ein normierter Gabelstapler die Anhebe-Aussparungen beidseitig des Sackstapels eingreifen kann, um den Sackstapel anzuheben bzw. weiter zu transportieren. Wird jeweils an vier Seiten des Sackstapels eine Anhebe-Aussparung vorgesehen, bietet dies darüber hinaus den Vorteil, dass der Sackstapel in der Handhabbarkeit weiter verbessert sein kann, da ein Hebemittel, wie ein Gabelstapler, unabhängig von der Ausrichtung des Sackstapels diesen anfahren und entsprechend transportieren kann.

Vorzugsweise kann ferner bei einem erfindungsgemäßen Verfahren vorgesehen sein, dass das Verfahren folgende Schritte umfasst:
- Entnehmen des Spezialsacks aus dem Förderpfad,
- Zwischenspeichern des Spezialsacks,
- erneutes Einbringen des Spezialsackes in den Förderpfad.

Zusätzlich oder alternativ kann vorgesehen sein, dass der Spezialsack entsprechend einem weiteren Förderpfad entnommen wird, dort zwischengespeichert wird und erneut in den weiteren Förderpfad eingebracht wird. Dadurch können Spezialsäcke vorproduziert werden und unabhängig von einem Bedarf im Stapelbereich in den Förderpfad eingebracht werden. Ist kein Bedarf an Spezialsäcken vorhanden, werden diese einfach dem Förderpfad entnommen, zwischengespeichert und erst bei Bedarf wieder eingebracht. Dadurch bleibt ein hoher Autorisierungsgrad bei der Transportierung der Spezialsäcke erhalten, wobei der Regelungsaufwand gering gehalten werden kann. Vorzugsweise kann das Entnehmen des Spezialsacks und das erneute Einbringen des Spezialsacks aufgrund von Signalen einer Steuereinheit und/oder einer Sensoreinheit durchgeführt werden. So kann der Bedarf durch eine Steuereinheit erkannt werden und der Spezialsack im Förderpfad durch eine Sensorvorrichtung insbesondere optisch erkannt werden.

Im Rahmen der Erfindung ist ferner denkbar, dass das Verfahren folgenden Schritt umfasst:
- Erkennen eines Bedarfs an zumindest einem Spezialsack.

Vorzugsweise kann dabei das Einbringen und/oder das erneute Einbringen des Spezialsacks erst dann durchgeführt werden, wenn der Bedarf erkannt wurde. Das Erkennen des Bedarfs an zumindest einem Spezialsack kann vorzugsweise automatisch durch eine Steuereinheit und/oder eine Sensoreinheit durchgeführt werden. Dadurch können auch weiterhin manuelle Tätigkeiten zum Stapeln der gefüllten Säcke reduziert werden und damit der Automatisierungsgrad erhöht werden. Dadurch ergibt sich eine hohe Reproduzierbarkeit des Stapelergebnisses bei geringen Kosten.

Die Verfahrensschritte eines erfindungsgemäßen Verfahrens können nacheinander oder zumindest teilweise parallel durchgeführt werden. Vorzugsweise können einzelne oder alle Verfahrensschritte wiederholt werden. Ferner können die Verfahrensschritte insbesondere in beliebiger Reihenfolge durchgeführt werden.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumlicher Anordnungen und Verfahrensschritte, können sowohl für sich, als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig.1: ein erfindungsgemäßes System mit einer erfindungsgemäßen Transportvorrichtung in einem ersten Ausführungsbeispiel;
- Fig. 2: eine Schiebevorrichtung der Stapeleinheit des ersten Ausführungsbeispiels,
- Fig. 3: ein erfindungsgemäßes System mit einer erfindungsgemäßen Transportvorrichtung in einem zweiten Ausführungsbeispiel,
- Fig. 4: ein erfindungsgemäßes System mit einer erfindungsgemäßen Transportvorrichtung in einem dritten Ausführungsbeispiel in schematischer Draufsicht,
- Fig. 5: Stapelbereiche des dritten Ausführungsbeispiels in schematischer Darstellung,
- Fig. 6: eine Schiebevorrichtung des dritten Ausführungsbeispiels in schematischer Draufsicht,
- Fig. 7: eine schematische Darstellung von Verfahrensschritten eines erfindungsgemäßen Verfahrens zum Stapeln von gefüllten Säcken in einem vierten Ausführungsbeispiel
- Fig. 8a bis k: weitere schematische Darstellungen von Verfahrensschritten des erfindungsgemäßen Verfahrens zum Stapeln von gefüllten Säcken des vierten Ausführungsbeispiels.

In den nachfolgenden Figuren werden für die gleichen technischen Merkmale auch von unterschiedlichen Ausführungsbeispielen identische Bezugszeichen verwendet.

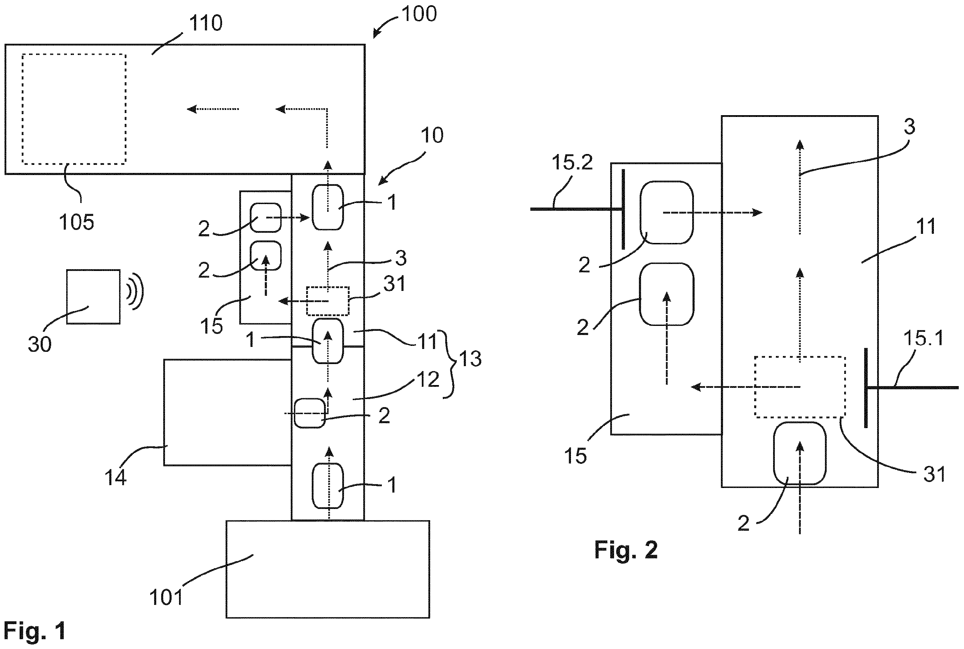

Figur 1 zeigt ein erfindungsgemäßes System 100 zum Stapeln von gefüllten Säcken 1, 2 zu einem unterschiedliche Sackformate aufweisenden Sackstapel 6 in einem ersten Ausführungsbeispiel in schematischer Draufsicht. Dabei ist eine Aufgabestation 101 vorgesehen, durch welche gefüllte Normalsäcke 1 in einen Förderpfad 3 zur Beförderung der gefüllten Normalsäcke von der Aufnahmestation 101 zu einem Stapelbereich 105 einbringbar sind. Insbesondere ist die Aufgabestation 101 dazu ausgebildet, Normalsäcke 1 zu befüllen und/oder aus einem Material, insbesondere einer Kunststofffolie, herzustellen. Der Förderpfad 3 ist ferner teilweise durch eine Transportvorrichtung 10 und teilweise durch eine an der Transportvorrichtung 10 angeordnete Stapeleinheit 110 ausgebildet. Durch die Stapeleinheit 110 ist der Sackstapel 6 im Stapelbereich 105 erstellbar. Vorzugsweise handelt es sich bei der Stapeleinheit 110 um einen Palettierer. Im Stapelbereich 105 ist durch die Stapeleinheit 110 ferner ein Sackstapel 6 aus gefüllten Normalsäcken 1 und gefüllten Spezialsäcken 2 herstellbar. Dabei ist ferner eine Bereitstellungseinheit 14 der Transportvorrichtung 10 vorgesehen, von welcher gefüllte Spezialsäcke 2 in den Förderpfad 3 einbringbar sind. Dadurch können die gefüllten Spezialsäcke 2 noch vor dem Erstellen der Lagen für den Sackstapel 6 in den Förderpfad 3 eingebracht werden und damit, ähnlich der Normalsäcke 1, eine automatisierte Behandlung erfahren. Insbesondere um mehrere Produktionshallen zu verbinden, weist die Transportvorrichtung 10 eine Fördereinheit 13 auf, die vorzugsweise zwei oder mehr Fördermittel 11, 12 umfasst. So kann die Bereitstellungseinheit 14 derart an der Transportvorrichtung 10 angeordnet sein, dass diese die Spezialsäcke 2 auf ein zweites Fördermittel 12 befördert, welches die Spezialsäcke 2 ferner entlang eines Teils des Förderpfades 3 transportiert und an ein erstes Fördermittel 11 weitergibt. Um die Spezialsäcke 2 unabhängig von einem Bedarf im Stapelbereich 105 in den Förderpfad 3 einbringen zu können, ist vorzugsweise eine Zwischenspeichereinheit 15 vorgesehen, durch welche die Spezialsäcke 2 lagerbar sind. So ist ferner eine Sensoreinheit 31 an der Fördereinheit 13 oder an der Zwischenspeichereinheit 15 angeordnet, durch welche ein gefüllter Spezialsack im Förderpfad 3 erkennbar ist und entsprechend dem Förderpfad 3 entnehmbar ist, um diesen der Zwischenspeichereinheit 15 zuzuführen. Ferner ist eine Steuereinheit 30 vorgesehen, welche dazu ausgebildet ist, einen Bedarf an Spezialsäcken 2 im Stapelbereich 105 zu erkennen. So kann die Steuereinheit 30 mit der Stapeleinheit 110 insbesondere drahtlos in Kommunikationsverbindung stehen, sodass z. B. im Stapelbereich 105 ausgebildete Lagen der gefüllten Säcke 1, 2 gezählt werden. Ist eine Sollgröße, z. B. die Anzahl der ausgebildeten Lagen, im Stapelbereich 105 erreicht, kann durch die Steuereinheit 30 somit ein Bedarf an Spezialsäcken festgestellt werden, sodass diese insbesondere als oberste Lage auf einem Sackstapel 6 im Stapelbereich 105 vorgesehen werden können. Insbesondere kann die Transportvorrichtung 10 oder die Stapeleinheit 110 die Steuereinheit 30 umfassen. Dazu können die Spezialsäcke 2 dem Zwischenspeicher 15 wieder entnommen werden und dem Förderpfad 3 zugeführt werden, sodass diese ähnlich einer Lage Normalsäcke durch die Stapeleinheit 110 verarbeitet werden können.

Vorzugsweise kann das Entnehmen der Spezialsäcke aus dem Förderpfad 3 zur Zwischenspeichereinheit 15 und aus der Zwischenspeichereinheit zurück in den Förderpfad 3 entsprechend Figur 2 durchgeführt werden. Dabei ist ein erstes Übergabemittel 15.1 vorgesehen, durch welches die gefüllten Spezialsäcke 2 vom Förderpfad 3 zur Zwischenspeichereinheit 15 gebracht werden können. Ferner ist ein zweites Übergabemittel 15.2 vorgesehen, durch welches eine Rückführung der Spezialsäcke aus der Zwischenspeichereinheit in den Förderpfad 3, d. h. insbesondere auf ein Fördermittel 11 der Fördereinheit 13, ermöglicht. Vorzugsweise können das erste und/oder das zweite Übergabemittel 15.1 als Schieber oder Ausstoßmittel vorgesehen sein. Dazu können die Zwischenspeichereinheit 15 und das Fördermittel 11 direkt aneinander angeordnet sein, um einen einfachen Übergang der Spezialsäcke 2 zu ermöglichen. Im dargestellten Ausführungsbeispiel werden die Spezialsäcke von der Zwischenspeichereinheit 15 dabei bei der Rückgabe in den Förderpfad 3 auf das Fördermittel 11 der Fördereinheit 13 gegeben. Dadurch kann die Zwischenspeichereinheit 15 entlang des Förderpfades 3 in der Nähe der Fördereinheit 13 angeordnet sein und damit unabhängig von der Stapeleinheit 110 ausgebildet sein.

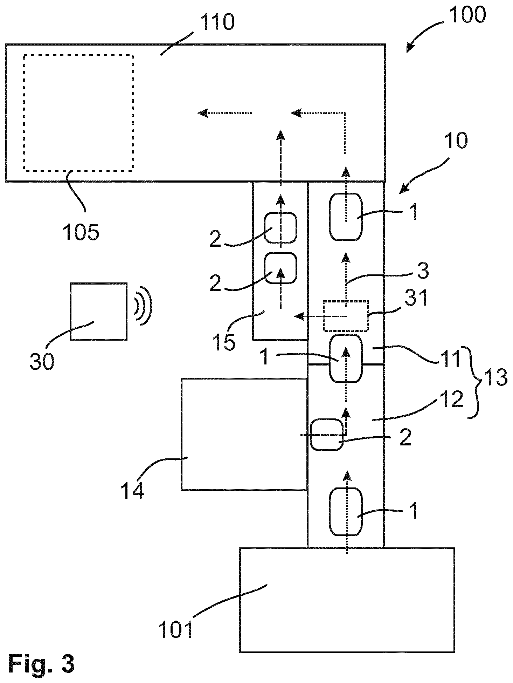

Figur 3 zeigt ferner ein erfindungsgemäßes System 100 mit einer erfindungsgemäßen Transportvorrichtung 10 in einem zweiten Ausführungsbeispiel in schematischer Draufsicht. Dabei entspricht das zweite Ausführungsbeispiel im Wesentlichen dem ersten Ausführungsbeispiel, weist jedoch Unterschiede in Bezug auf die Zwischenspeichereinheit 15 auf. So ist eine Zwischenspeichereinheit 15 des zweiten Ausführungsbeispiels derart an einem ersten Fördermittel 11 einer Fördereinheit 13 der Transportvorrichtung 10 und an einer Stapeleinheit 110 angeordnet, dass Spezialsäcke 2 dem Förderpfad 3 entnehmbar sind und in der Zwischenspeichereinheit 15 lagerbar sind. Im dargestellten Ausführungsbeispiel werden diese jedoch nicht zurück auf die Fördereinheit 11 gegeben, sondern bei Bedarf direkt an die Stapeleinheit 110 weitergeleitet. Dadurch kann die Fördereinheit 11 zumindest im Wesentlichen unabhängig von der Zwischenspeichereinheit 15 arbeiten. Damit ist es beispielsweise nicht notwendig, eine Zufuhr von Normalsäcken durch ein zweites Fördermittel 12 zum ersten Fördermittel 11 zu stoppen, sodass Spezialsäcke 2 nacheinander zum Fördermittel 11 übergeben werden können oder entsprechend das Einbringen der Spezialsäcke 2 in den Förderpfad 3 derart abzupassen, dass keine Normalsäcke 1 unbeabsichtigt in eine auszubildende Speziallage eingebracht werden. Stattdessen können durch die Ausbildung des zweiten Ausführungsbeispiels beispielsweise bei Bedarf einer Speziallage die Fördermittel 11, 12 der Fördereinheit 13 vollständig stoppen oder einen langsameren Transport der Normalsäcke zumindest bereichsweise realisieren, sodass die Spezialsäcke vorzugsweise nacheinander zum Ausbilden einer Speziallage in die Stapeleinheit 110 eingebracht werden können. Vorzugsweise kann die Zwischenspeichereinheit des ersten und/oder des zweiten Ausführungsbeispiels ausgebildet sein, die Spezialsäcke 2 in einer Ebene zu lagern, wobei die Zwischenspeichereinheit beispielsweise ein Transportband oder einen Rollenförderer aufweisen kann und die Zufuhr damit in einfacher Art und Weise realisierbar ist.

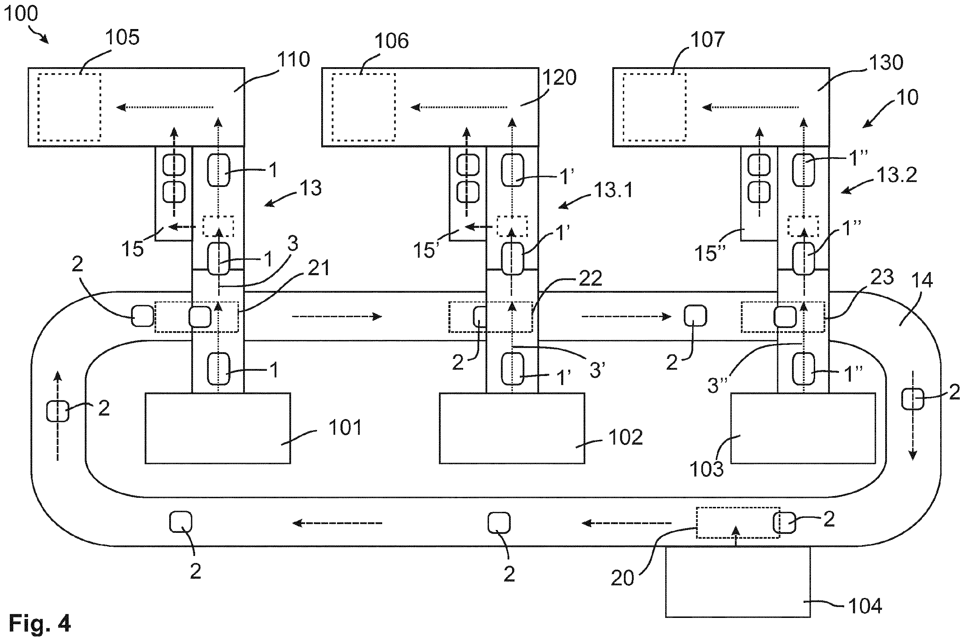

Figur 4 zeigt ein erfindungsgemäßes System 100 mit einer erfindungsgemäßen Transportvorrichtung 10 in einem dritten Ausführungsbeispiel. Die Transportvorrichtung 10 weist eine Fördereinheit 13 auf, durch die zumindest teilweise ein Förderpfad 3 von einer Aufgabesituation 101 zu einem Stapelbereich 105 ausgebildet ist. Im Stapelbereich 105 ist ferner durch die Stapeleinheit 110 ein Sackstapel 6 aus gefüllten Normalsäcken 1 und gefüllten Spezialsäcken 2 erstellbar. Die Spezialsäcke 2 sind insbesondere durch eine Zwischenspeichereinheit 15 in den Förderpfad 3 derart einbringbar, dass die Spezialsäcke 2 direkt in die Stapeleinheit 110 übergeben werden. Zusätzlich oder alternativ ist es denkbar, dass die Spezialsäcke 2 aus der Zwischenspeichereinheit 15 in die Fördereinheit 13 der Transportvorrichtung 10 zurückgeführt werden. Um in der Zwischenspeichereinheit 15 zwischengelagert zu werden, sind die Spezialsäcke ferner von einer Bereitstellungseinheit 14 in den Förderpfad 3 einbringbar. So kann ein Übergabemittel an der Bereitstellungseinheit 14 und/oder an der Fördereinheit 13 vorgesehen sein, durch welche die Spezialsäcke 2 von der Bereitstellungseinheit 14 an einem ersten Abgabebereich 21 in den Förderpfad 3 einbringbar sind. Dabei ist die Bereitstellungseinheit 14 umlaufend ausgebildet, wobei die gefüllten Spezialsäcke an einem Aufgabebereich 20 durch eine Spezialaufgabestation 104 aufgegeben werden können, d. h. zur Beförderung an die Bereitstellungseinheit 14 übergeben werden können. Dadurch können unabhängig von der Produktion von gefüllten Normalsäcken 1 gefüllte Spezialsäcke 2 produziert werden und von der Bereitstellungseinheit 14 im Kreis gefördert werden, bis eine entsprechender Bedarf entsteht. Weiterhin bietet die umlaufende Bereitstellungseinheit 14 den Vorteil, dass weitere Förderpfade 3', 3" durch die Bereitstellungseinheit 14 mit Spezialsäcken 2 an einem zweiten und/oder dritten Abgabebereich 22, 23 bedienbar sind. So sind ferner zwei weitere Produktionslinien für Sackstapel 6' und 6"an weiteren Stapelbereichen 106, 107 vorgesehen. Dabei sind durch eine weitere Aufgabenstation 102 Sekundärsäcke in den weiteren Förderpfad 3' einbringbar. Vorzugsweise kann die Transportvorrichtung 10 zur Ausbildung von jeweils zumindest einem Teil der weiteren Förderpfade 3', 3" weitere Fördereinheiten 13.1, 13.2 aufweisen. Die Sekundärsäcke 1' können vorzugsweise wie die Normalsäcke 1 ausgebildet sein oder ein unterschiedliches Format zu den Normalsäcken 1 aufweisen. Weiterhin ist noch eine weitere Aufgabenstation 103 vorgesehen, durch welche ein weiterer Förderpfad 3" zum Befördern von Tertiärsäcken 1" zu einem weiteren Stapelbereich 107 mit gefüllten Spezialsäcken 2 bedienbar ist. Die weiteren Stapelbereiche 106, 107 können jeweils dazu ausgebildet sein, dass die weiteren Sackstapel 6', 6" jeweils durch weitere Stapeleinheiten 120, 130 automatisiert erstellbar sind. Somit kann durch die Transportvorrichtung 10 vorgesehen sein, mehrere Produktionslinien an Sackstapeln 6, 6', 6" zu bedienen, wobei eine einzige Spezialaufgabestation 104 dazu ausgebildet sein kann, die Spezialsäcke 2 zu befüllen und auf die Bereitstellungseinheit 14 zu geben, wobei die Bereitstellungseinheit 14 dazu ausgebildet ist, die Spezialsäcke 2 entsprechend eines Bedarfs an Förderpfade 3, 3', 3" zu transportieren. Optional kann jeweils neben den Förderpfade 3, 3', 3" eine Zwischenspeichereinheit 15, 15', 15" angeordnet sein, sodass die Spezialsäcke 2 auch nach Einbringen der Spezialsäcke 2 an der Bereitstellungseinheit 14 in die Förderpfade 3, 3', 3" zwischenlagerbar sind. Somit ist es nicht notwendig, Aufgabestationen 101, 102, 103 auf die Produktion von Spezialsäcken 2 umzustellen oder die Spezialsäcke 2 in entsprechend großer Menge vollständig vorzuproduzieren, um eine bestimmte Anzahl an Sackstapeln dadurch bedienen zu können.

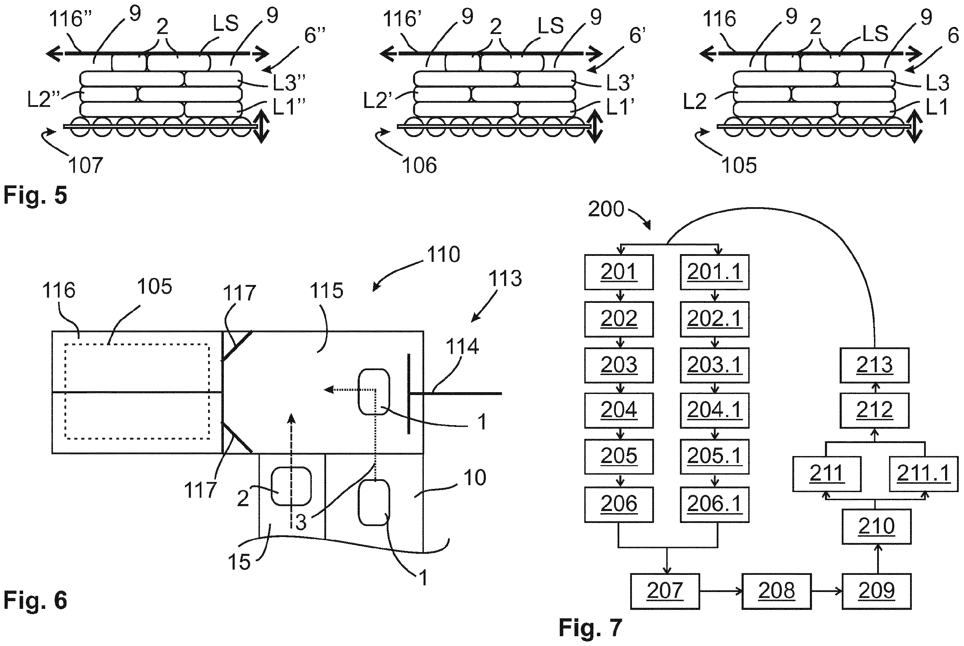

Figur 5 zeigt ferner fertig ausgebildete Sackstapel 6, 6' ,6" jeweils unterhalb eines Schiebetisches 116, 116', 116 " von den Stapeleinheiten 110, 120, 130 des dritten Ausführungsbeispiels. Dabei sind unterschiedliche Lagen aus Normalsäcken L1, L2, L3 bzw. Sekundärsäcken L1', L2'. L3' bzw. Tertiärsäcken L1", L2" und L3" aufgeschichtet. Ferner ist jeweils die oberste, d. h. in der Produktion die letzte Lage den Abschluss des Sackstapels 6, 6', 6", als Speziallage LS aus Spezialsäcken 2 erstellt. Dadurch entstehen in den Seitenbereichen der Sackstapel 6, 6' und 6" Anhebe-Aussparungen 9 durch welche die Sackstapel 6, 6' und 6" nach einem Wenden anhebbar sind. So kann die Speziallage LS derart ausgebildet sein, dass in die Anhebe-Aussparungen 9 der Speziallage LS ein normierter Gabelstapler eingreifen kann, um den jeweiligen Sackstapel 6, 6', 6" anzuheben.

Zur automatisierten Ausbildung von unterschiedlichen Lagen eines Sackstapels 6 weist die Stapeleinheit 110 des dritten Ausführungsbeispiels ferner eine Schiebevorrichtung 113 gemäß Figur 6 auf. Vorzugsweise umfasst auch die Stapeleinheit des ersten und/oder des zweiten Ausführungsbeispiels und/oder die weiteren Stapeleinheiten 120, 130 des dritten Ausführungsbeispiels eine derartig ausgebildete Schiebevorrichtung 113. Zusätzlich oder alternativ kann jedoch zum Stapeln beispielsweise auch vorgesehen sein, dass eine manuelle Tätigkeit ausgeführt wird oder die Ausbildung der Lagen mittels eines Roboterarms realisiert ist. Im in Fig. 6 dargestellten Ausführungsbeispiel eines erfindungsgemäßen Systems 100 ist eine Stapeleinheit 110 an einer Transportvorrichtung 10 zum Befördern von Normalsäcken 1 und Spezialsäcken 2 angeordnet. Von der Transportvorrichtung 10 werden die gefüllten Säcke 1, 2 auf eine Schiebefläche 115 befördert, unter welcher die gefüllten Säcke 1, 2 durch einen Schieber 114 auf einen Schiebetisch 116 geschoben werden. Dabei ist der Schiebetisch 116 dazu ausgebildet, sich zu öffnen, sodass eine auf den Schiebetisch 116 gebildete Lage im Stapelbereich 105, insbesondere auf unter dem Schiebetisch 116 gebildeten Lagen, vorzugsweise durch Schwerkraftförderung angeordnet wird. Zum Ausbilden der Lage können vorzugsweise Ausrichtmittel 117 der Schiebevorrichtung 113 vorgesehen sein. Ferner ist auch die Zwischeneinheit 15 an der Schiebefläche 115 angeordnet, so dass auch die Spezialsäcke, welche in den Förderpfad 3 im Bereich der Stapeleinheit 110 einbringbar sind, durch den Schieber 116 weiterbefördert werden können. Wie zuvor beschrieben ist zusätzlich oder alternativ jedoch beispielsweise auch denkbar, dass eine Zwischeneinheit nicht vorgesehen ist oder die Spezialsäcke 2 durch die Zwischenspeichereinheit 15 an die Transportvorrichtung 10 übergeben werden, bevor die Spezialsäcke 2 die Stapeleinheit 110 erreichen.

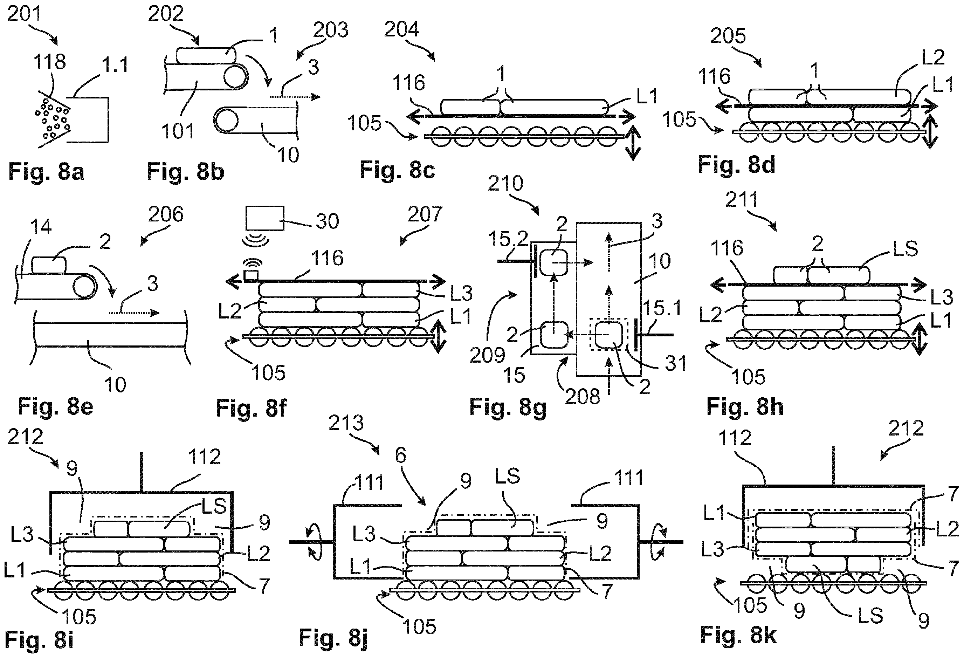

Die Figur 7 und die Figuren 8a-k zeigen ein erfindungsgemäßes Verfahren 200 in einem vierten, weiteren Ausführungsbeispiel. Dazu ist der Verfahrensablauf schematisch beispielhaft in Figur 7 dargestellt. Die Figuren 8a-k zeigen einzelne Verfahrensschritte ferner im weiteren Detail. So ist im Rahmen des Verfahrens 200, wie in Figur 8a näher gezeigt, ein Befüllen 201 eines ungefüllten Normalsackes 1.1 zu einem gefüllten Normalsack 1 vorgesehen. Dies wird vorzugsweise in einer Aufgabestation 101 durchgeführt. Figur 8b zeigt ferner ein Einbringen 202 von gefüllten Normalsäcken 1 in einen Förderpfad 3 zur Beförderung der gefüllten Normalsäcke 1 von einer Aufgabestation 101 zu einem Stapelbereich 105 entlang zumindest eines Teils des Förderpfades 3. Nach dem Einbringen der gefüllten Normalsäcke 1 in den Förderpfad 3 erfolgt durch eine Transportvorrichtung 10 ferner ein Transportieren 203 der gefüllten Normalsäcke 1 entlang des Förderpfades 3 zu einem Stapelbereich 105. Ferner zeigt Figur 8c ein Ausbilden 204 einer erste Lage LS, wobei die erste Lage LS aus zumindest zwei Reihen von gefüllten Normalsäcken 1 auf einem Schiebetisch 116 angeordnet und anschließend durch Schwerkraftförderung bei einer Öffnung des Schiebetisches 116 als unterste Lage im Stapelbereich 105 ausgebildet wird. Gemäß Figur 8d erfolgt daraufhin ein Ausbilden 205 einer zweiten Lage L2 auf der ersten Lage L1 im Stapelbereich 105 mit gefüllten Normalsäcken 1, wobei die zweite Lage L2 entsprechend analog zur ersten Lage L1 ausgebildet wird und auf dieser angeordnet wird. Parallel zur Verarbeitung der Normalsäcke 1 oder nach der Verarbeitung der Normalsäcke 1 ist ferner ein Einbringen 206 gemäß Figur 8e von zumindest einem Spezialsack 2 in den Förderpfad 3 vorgesehen. Dies kann durch eine Bereitstellungseinheit 14 gewährleistet sein. Vorzugsweise können analog zum Befüllen der Normalsäcke gemäß Figur 8a auch die Spezialsäcke 2 vor dem Einbringen in den Förderpfad 3 befüllt werden. Gemäß Figur 8g ist ferner ein Entnehmen 208 des zuvor in den Förderpfad 3 eingebrachten Spezialsackes 2 aus dem Förderpfad 3 vorgesehen, wobei anschließend ein Zwischenspeichern 209 des Spezialsacks 2 mit weiteren Spezialsäcken 2 in einer Zwischenspeichereinheit 15 erfolgt. Das Zwischenspeichern 209 kann dabei beispielsweise als langsames Befördern entlang der Zwischenspeichereinheit 15 durchgeführt werden. Bei Bedarf einer Speziallage LS im Stapelbereich 105 wird anschließend erneut ein Einbringen 210 des Spezialsacks 2 in den Förderpfad 3 ausgeführt, sodass dieser gemäß Figur 8h Teil einer Speziallage LS sein kann. Auch ein Ausbilden 211 der Speziallage LS kann dadurch erfolgen, dass die Speziallage LS an dem Schiebetisch 116 im Stapelbereich 105 zunächst vorgeformt wird und anschließend auf die bereits aufgestapelten Lagen aus Normalsäcken L1, L2, L3 aufgebracht wird. Zuvor kann gemäß Figur 8f ein Erkennen 207 eines Bedarfs an Spezialsäcken 2 vorgesehen sein, wobei der Bedarf einer Steuereinheit 30 der Transportvorrichtung 10 oder des Systems 100 gemeldet wird, wobei beispielsweise eine Schiebevorrichtung 113 ein Kommunikationsmittel aufweisen kann. Der Bedarf kann beispielsweise dann vorgesehen sein, wenn ausreichend Lagen L1, L2, L3 aus Normalsäcken 1 für einen Sackstapel 6 im Stapelbereich 105 ausgebildet sind. Daraufhin kann, wie in Figur 8i dargestellt, mittels einer Umhüllungsvorrichtung 112 ein zumindest teilweises Umhüllen 212 des Sackstapels 6 mit einer Folie 7 durchgeführt werden, die insbesondere als Stretchhaube auf den Sackstapel 6 aufgebracht werden kann. Gemäß Figur 8j kann daraufhin ein Wenden 213 des Sackstapels 6 mitsamt der Folie 7 ausgeführt werden, sodass eine zuvor oberste Lage eine unterste Lage des Sackstapels nach dem Wenden 213 bildet und somit Anhebe-Aussparungen 9 an der Speziallage LS im unteren Bereich des Sackstapels 6 vorgesehen sind und ferner der Sackstapel 6 beispielsweise erneut mittels der Umhüllungsvorrichtung 112 mit einer weiteren Folie 7 in einem erneuten Umhüllen 212 zumindest teilweise umhüllt werden kann. Die weitere Folie kann dabei auch als Stretchhaube ausgebildet sein. Letzteres ist in Figur 8k dargestellt. Parallel und analog zur Behandlung der Normalsäcke 1 gemäß der Figuren 8a bis k kann in einem weiteren Stapelbereich 106 oder in weiteren Stapelbereichen 106, 107 vorgesehen sein, dass Sekundärsäcke und/oder Tertiärsäcke 1' bzw. 1" verarbeitet werden. Dies kann vorzugsweise parallel zur Verarbeitung der Normalsäcke 1 oder nach der Verarbeitung der Normalsäcke 1 durchgeführt werden. Insbesondere kann Letzteres beispielsweise in einem System zum Stapeln von gefüllten Säcken 1, 2 gemäß des dritten Ausführungsbeispiels durchgeführt werden. Wie in Figur 7 ferner dargestellt kann vorzugsweise parallel ein Befüllen 201.1 von zuvor ungefüllten Sekundärsäcken, ein Einbringen 202.1 der gefüllten Sekundärsäcke 1' in einen weiteren Förderpfad 3', ein Transportieren 203.1 der Sekundärsäcke 1' zu einem weiteren Stapelbereich 106, ein Ausbilden 204.1, 205.1 einer ersten und einer zweiten Lage von gefüllten Sekundärsäcken 1' sowie ein Einbringen 206.1 von zumindest einem Spezialsack 2 in den weiteren Förderpfad 3' und ein Ausbilden 211.1 vorgesehen sein. Die Schritte 201.1 bis 206.1 und 211.1 können dabei analog zu den zuvor beschriebenen Schritten 201 bis 206 bzw. 211 ausgeführt werden. Ferner kann ein erfindungsgemäßes Verfahren 200 gemäß des Ausführungsbeispiels der Figuren 8a bis k mittels einer Transportvorrichtung bzw. eines Systems des ersten und/oder zweiten Ausführungsbeispiels durchgeführt werden.

Wie bereits zuvor beschrieben, ist in den Figuren 8 I bis K eine vorteilhafte Möglichkeit eines Ergebnisses des erfindungsgemäßen Verfahrens gezeigt. So weist der Sackstapel 6 unterschiedliche Lagen L1, L2, L3, LS aus gefüllten Normalsäcken 1 und gefüllten Spezialsäcken 2 auf. Dabei sind gemäß der Darstellungen in den Figuren 8I und 8J die Lagen aus Normalsäcken 1, L1, L2, L3 zuerst ausgebildet worden. Dadurch wird eine unterste Lage des Sackstapels 6 durch die erste Lage L1 aus zumindest zwei Reihen gefüllter Normalsäcke 1 gebildet und die oberste Lage des Sackstapels 6 durch eine Speziallage LS aus Spezialsäcken 2. Dadurch weist der Sackstapel 6 im Bereich seiner obersten Lage an den Seiten Anhebe-Aussparungen 9 aus, durch welche der Sackstapel 6 vorzugsweise durch einen normierten Gabelstapler anhebbar ist. Durch eine Umhüllungsvorrichtung 112 einer Stapeleinheit 110 ist ferner der Sackstapel 6 durch eine Folie 7 zumindest teilweise umhüllbar. Im dargestellten Ausführungsbeispiel bildet die Folie 7 eine Stretchhaube, sodass der Sackstapel 6 von oben gegenüber Umwelteinflüssen zumindest teilweise geschützt ist. Durch ein Wendemittel 111 der Stapeleinheit 110 ist der Stapel ferner derart drehbar, dass eine zuvor oberste Lage eine unterste Lage des Sackstapels 6 bildet. Dies ist in Figur 8K dargestellt. Dadurch ist zum einen der Sackstapel 6 auch von der zuvor unteren Seite mit einer Stretchhaube aus Folie 7 verhüllbar, sodass dieser vollständig oder in großen Teilen gegenüber Umwelteinflüssen geschützt ist. Darüber hinaus verstärkt dies die Ladungssicherung in Bezug auf die aufgeschichteten Säcke. Wird, wie dargestellt, der Sackstapel derart ausgebildet, dass die Speziallage LS als letzte Lage auf den Stapel gebracht wird und anschließend gewendet wird, hat dies den Vorteil, dass die Anhebe-Aussparungen 9 in einem einzelnen Wendeschritt zur Unterseite des Sackstapels 6 befördert werden, sodass der Sackstapel 6 an den Anhebe-Aussparungen 9 anhebbar ist, wobei gleichzeitig ein Großteil des Gewichtes des Sackstapels 6 über die Anhebe-Aussparungen 9 getragen wird und lediglich der mittlere Teil auf der Folie 7 lastet.

Die Verfahrensschritte des Verfahrens 200 können nacheinander oder zumindest teilweise parallel durchgeführt werden. Dabei entspricht die beschriebene Reihenfolge der Verfahrensschritte einer bevorzugten Reihenfolge, wobei jedoch diverse weitere Kombinationsmöglichkeiten vorteilhaft sein können. Insbesondere können einzelne oder alle Verfahrensschritte wiederholt werden.

### Bezugszeichenliste

- 1: Normalsack
- 1': Sekundärsack
- 1": Tertiärsack
- 1.1: ungefüllter Normalsack
- 2: Spezialsack
- 3: Förderpfad
- 3', 3": weiterer Förderpfad
- 6: Sackstapel
- 7: Folie

- 10: Transportvorrichtung
- 11: erstes Fördermittel
- 12: zweites Fördermittel
- 13: Fördereinheit
- 13.1, 13.2: weitere Fördereinheiten
- 14: Bereitstellungseinheit
- 15: Zwischenspeichereinheit
- 15.1: erstes Übergabemittel
- 15.2: zweites Übergabemittel

- 20: Aufgabebereich
- 21: erster Abgabebereich
- 22: zweiter Abgabebereich
- 23: dritter Abgabebereich

- 30: Steuereinheit
- 31: Sensoreinheit
- 100: System
- 101: Aufgabestation
- 102, 103: weitere Aufgabestationen

- 104: Spezialaufgabestation
- 105: Stapelbereich
- 106, 107: weiterer Stapelbereich

- 110: Stapeleinheit
- 111: Wendemittel
- 112: Umhüllungsvorrichtung
- 113: Schiebevorrichtung
- 114: Schieber
- 115: Schiebefläche
- 116: Schiebetisch
- 117: Ausrichtmittel
- 118: Befüllungsvorrichtung

- 120, 130: weitere Stapeleinheit

- L1: erste Lage
- L2: zweite Lage
- L3: dritte Lage
- LS: Speziallage

- L1', L1": weitere erste Lage
- L2', L2": weitere zweite Lage
- L3', L3": weitere dritte Lage

## Patentansprüche

1. Transportvorrichtung (10) zum Befördern von gefüllten Säcken (1, 2),
aufweisend eine Fördereinheit (13), durch welche zumindest ein Teil eines Förderpfades (3) zum Befördern von gefüllten Normalsäcken (1) von einer Aufgabestation (101) zu einem Stapelbereich (105) ausbildbar ist,
wobei eine Bereitstellungseinheit (14) vorgesehen ist, von welcher gefüllte Spezialsäcke (2), in den Förderpfad (3) einbringbar sind, so dass im Stapelbereich (105) ein Sackstapel (6) aus gefüllten Normalsäcken (1) und gefüllten Spezialsäcken (2) erstellbar ist,
**dadurch gekennzeichnet, dass** an der Bereitstellungseinheit (14) eine Spezialaufgabestation (104) zum Befüllen zuvor ungefüllter Spezialsäcke (2), die im Vergleich zu den Normalsäcken ein abgeändertes Format aufweisen, und zum Einbringen der gefüllten Spezialsäcke (2) in die Bereitstellungseinheit (14) angeordnet ist.

2. Transportvorrichtung (10) nach Anspruch 1,
**dadurch gekennzeichnet,**
**dass** eine Zwischenspeichereinheit (15) vorgesehen ist, in welcher die gefüllten Spezialsäcke (2) lagerbar sind, wobei die Zwischenspeichereinheit (15) derart an der Fördereinheit (13) angeordnet ist, dass die gefüllten Spezialsäcke (2) der Zwischenspeichereinheit (15) vom Förderpfad (3) zuführbar sind, insbesondere dass die Zwischenspeichereinheit (15) zur Lagerung der gefüllten Spezialsäcke (2) in einer Ebene ausgebildet ist.

3. Transportvorrichtung (10) nach Anspruch 2,
**dadurch gekennzeichnet,**
**dass** die gefüllten Spezialsäcke (2) von der Zwischenspeichereinheit (15) direkt an eine Stapeleinheit (110) des Stapelbereiches (105) oder an die Fördereinheit (13) in den Förderpfad (3) übergebbar sind.

4. Transportvorrichtung (10) nach einem der vorhergehenden Ansprüche,
**dadurch gekennzeichnet,**
**dass** eine Steuereinheit (30) vorgesehen ist, durch welche ein Bedarf an gefüllten Spezialsäcken (2) im Stapelbereich (105) erkennbar ist, insbesondere dass die Steuereinheit (30) derart ausgebildet ist, dass der Bedarf an gefüllten Spezialsäcken (2) auslösbar ist, wenn ein vordefinierter Sollparameter im Stapelbereich (105) erreicht ist.

5. Transportvorrichtung (10) nach einem der vorhergehenden Ansprüche 2 bis 4,
**dadurch gekennzeichnet,**
**dass** an der Fördereinheit (13) und/oder an der Zwischenspeichereinheit (15) eine Sensoreinheit (31) angeordnet ist, durch welche die gefüllten Spezialsäcke (2) erkennbar sind und/oder
**dass** die Bereitstellungseinheit (14), die Fördereinheit (13) und/oder die Zwischenspeichereinheit (15) ein Transportband und/oder einen Rollenförderer umfasst.

6. Transportvorrichtung (10) nach einem der vorhergehenden Ansprüche,
**dadurch gekennzeichnet,**
**dass** die Bereitstellungseinheit (14) ein umlaufendes Fördermittel aufweist, insbesondere wobei die Bereitstellungseinheit (14) einen Aufgabebereich (20) zur Aufnahme der gefüllten Spezialsäcke (2) und zumindest einen ersten Abgabebereich (21) zur Übergabe der gefüllten Spezialsäcke (2) in den Förderpfad (3) umfasst oder
**dass** die Bereitstellungseinheit (14) zumindest einen ersten Abgabebereich (21) und einen zweiten Abgabebereich (22) aufweist, insbesondere wobei am ersten Abgabebereich (21) gefüllte Spezialsäcke (2) eines ersten Formats in den Förderpfad (3) einbringbar sind und am zweiten Abgabebereich (22) gefüllte Spezialsäcke (2) eines zweiten Formats und/oder des ersten Formats in einen weiteren Förderpfad (3') einbringbar sind.

7. System (100) zum Stapeln von gefüllten Säcken (1, 2), aufweisend
eine Aufgabestation (101), durch welche gefüllte Normalsäcke (1) in einen Förderpfad (3) zur Beförderung der gefüllten Normalsäcke (1) von der Aufgabestation (101) zu einem Stapelbereich (105) einbringbar sind,
eine Transportvorrichtung (10) welche an der Aufgabestation (101) angeordnet ist, so dass durch eine Fördereinheit (13) der Transportvorrichtung (10) zumindest ein Teil des Förderpfades (3) ausgebildet ist,
und eine an der Transportvorrichtung (10) angeordnete Stapeleinheit (110), durch welche ein Sackstapel (6) erstellbar ist, wobei
die Transportvorrichtung (10) eine Bereitstellungseinheit (14) aufweist, von welcher gefüllte Spezialsäcke (2), in den Förderpfad (3) einbringbar sind, so dass im Stapelbereich (105) der Sackstapel (6) aus gefüllten Normalsäcken (1) und gefüllten Spezialsäcken (2) erstellbar ist,
**dadurch gekennzeichnet, dass** an der Bereitstellungseinheit (14) eine Spezialaufgabestation (104) zum Befüllen zuvor ungefüllter Spezialsäcke (2), die im Vergleich zu den Normalsäcken ein abgeändertes Format aufweisen, und zum Einbringen der gefüllten Spezialsäcke (2) in die Bereitstellungseinheit (14) angeordnet ist.

8. System (100) nach Anspruch 7,
**dadurch gekennzeichnet,**
**dass** die Aufgabestation (101) eine Befüllungsvorrichtung (118) aufweist, durch welche zuvor ungefüllte Normalsäcke (1.1) befüllbar sind.

9. System (100) nach einem der vorhergehenden Ansprüche,
**dadurch gekennzeichnet,**
**dass** die Transportvorrichtung (10) zumindest eine weitere Fördereinheit (13.1) aufweist, an welcher zumindest eine weitere Stapeleinheit (120) zum Erstellen eines weiteren Sackstapels (6') anordbar ist und/oder
**dass** zumindest eine weitere Aufgabestation (102), durch welche Sekundärsäcke (1') befüllbar sind, und/oder zumindest eine weitere Stapeleinheit (120) zum Erstellen eines weiteren Sackstapels (6') an der Transportvorrichtung (10), insbesondere an einer weiteren Fördereinheit (13.1), angeordnet ist.

10. System (100) nach einem der vorhergehenden Ansprüche,
**dadurch gekennzeichnet,**
**dass** die Transportvorrichtung (10) und/oder die Stapeleinheit (110) eine Steuereinheit (30) aufweist, durch welche ein Bedarf an gefüllten Spezialsäcken (2) im Stapelbereich (105) erkennbar ist.

11. System (100) nach einem der vorhergehenden Ansprüche,
**dadurch gekennzeichnet,**
**dass** die Stapeleinheit (110) ein Wendemittel (111) aufweist, durch welches der Sackstapel (6) derart drehbar ist, dass eine zuvor oberste Lage des Sackstapels (6) nach der Drehung durch das Wendemittel (111) eine unterste Lage des Sackstapels (6) bildet und/oder
**dass** die Stapeleinheit (110) eine Umhüllungsvorrichtung (112) aufweist, durch welche der Sackstapel (6) zumindest teilweise mit einer Folie (7), insbesondere einer Stretchhaube, verhüllbar ist.

12. System (100) nach einem der vorhergehenden Ansprüche,
**dadurch gekennzeichnet,**
**dass** die Stapeleinheit (110) eine Schiebevorrichtung (113) aufweist, durch welche ein Teil des Förderpfades (3) gebildet ist, wobei die Schiebevorrichtung (113) einen Schieber (114) aufweist, durch welchen die gefüllten Säcke (1, 2) von einer Schiebefläche (115) auf einen Schiebetisch (116) beförderbar sind.

13. Verfahren (200) zum Stapeln von gefüllten Säcken (1, 2) zu einem Sackstapel (6), umfassend die folgenden Schritte:
- Einbringen (202) von gefüllten Normalsäcken (1) in einen Förderpfad (3) zur Beförderung der gefüllten Normalsäcke (1) von einer Aufgabestation (101) zu einem Stapelbereich (105),
- Transportieren (203) der gefüllten Normalsäcke (1) entlang eines Teils des Förderpfades (3) zu dem Stapelbereich (105) durch eine Transportvorrichtung (10) nach einem der Ansprüche 1 bis 6,
- Ausbilden (204) einer ersten Lage (L1) aus zumindest zwei Reihen von gefüllten Normalsäcken (1) im Stapelbereich (105),
- Ausbilden (205) zumindest einer zweiten Lage (L2) aus zumindest zwei Reihen von gefüllten Normalsäcken (1) auf der ersten Lage (L1),
**dadurch gekennzeichnet,**
**dass** zumindest folgende Schritte vorgesehen sind:
- Einbringen (206) von zumindest einem Spezialsack (2), der im Vergleich zu den Normalsäcken ein abgeändertes Format aufweisen, in den Förderpfad (3),
- Ausbilden (211) einer Speziallage (LS) aus zumindest einem Spezialsack (2) im Stapelbereich (105).

14. Verfahren (200) nach Anspruch 13,
**dadurch gekennzeichnet,**
**dass** das Verfahren (200) folgenden Schritt umfasst:
- Wenden (213) der ausgebildeten Lagen (L1, L2, LS) des Sackstapels (6), so dass eine zuvor oberste Lage nach dem Wenden eine unterste Lage des Sackstapels (6) bildet und/oder
**dass** die Speziallage (LS) als eine letzte Lage des Sackstapels (6) ausgebildet wird und/oder
**dass** das Verfahren (200) ferner folgenden Schritt umfasst:
- Umhüllen (212) des Sackstapels (6) mit einer Folie (7), insbesondere wobei der Sackstapel (6) mit eine Stretchhaube teilweise umhüllt wird.

15. Verfahren (200) nach einem der vorhergehenden Ansprüche,
**dadurch gekennzeichnet,**
**dass** folgende Schritte ausgeführt werden:
- Transportieren (203.1) von gefüllten Sekundärsäcken (1') entlang eines weiteren Förderpfades (3') zu einem weiteren Stapelbereich (106),
- Ausbilden (204.1) einer ersten Lage (L1') aus zumindest zwei Reihen von gefüllten Sekundärsäcken (1') im weiteren Stapelbereich (106),
- Ausbilden (205.1) zumindest einer zweiten Lage (L2') aus zumindest zwei Reihen von gefüllten Sekundärsäcken (1') auf der ersten Lage (L1') von gefüllten Sekundärsäcken (1'),
- Einbringen (206.1) von zumindest einem Spezialsack (2) in den weiteren Förderpfad (3'),
- Ausbilden (211.1) einer Speziallage (LS') aus zumindest einem Spezialsack (2) im weiteren Stapelbereich (106).

16. Verfahren (200) nach einem der vorhergehenden Ansprüche,
**dadurch gekennzeichnet,**
**dass** der Sackstapel (6) quaderartig ausgebildet wird und das Ausbilden der Speziallage (LS) ein derartiges Anordnen der gefüllten Spezialsäcke (2) umfasst, dass zumindest an zwei Seiten (6.1), bevorzugt an vier Seiten des Sackstapels (6), jeweils eine Anhebe-Aussparung (9) entsteht und/oder
**dass** das Verfahren (200) folgende Schritte umfasst:
- Entnehmen (208) des Spezialsacks (2) aus dem Förderpfad (3),
- Zwischenspeichern (209) des Spezialsacks (2),
- Erneutes Einbringen (210) des Spezialsacks (2) in den Förderpfad (3).

17. Verfahren (200) nach einem der vorhergehenden Ansprüche,
**dadurch gekennzeichnet,**
**dass** das Verfahren (200) folgenden Schritt umfasst:
- Erkennen (207) eines Bedarfs an zumindest einem Spezialsack (2), insbesondere wobei das Einbringen (208) und/oder das erneute Einbringen (210) des Spezialsacks (2) erst dann durchgeführt wird, wenn der Bedarf erkannt wurde.

## Claims

1. A transport device (10) for conveying filled sacks (1, 2), having a
conveying unit (13), by means of which at least part of a conveying path (3) for conveying filled standard sacks (1) from a feed station (101) to a stacking region (105) can be formed, wherein a provision unit (14) is provided, from which filled special sacks (2) can be introduced into the conveying path (3), so that a sack stack (6) consisting of filled standard sacks (1) and filled special sacks (2) can be created in the stacking region (105),
**characterized in**
**that** a special feed station (104) is arranged on the provision unit (14) for filling previously unfilled special sacks (2), which in comparison to the standard sacks have a modified format, and for introducing the filled special sacks (2) into the provision unit (14).

2. The transport device (10) according to claim 1,
**characterized in**
**that** an intermediate storage unit (15) is provided, in which the filled special sacks (2) can be stored, wherein the intermediate storage unit (15) is arranged on the conveying unit (13) in such a manner that the filled special sacks (2) of the intermediate storage unit (15) can be fed from the conveying path (3), in particular, that the intermediate storage unit (15) is designed for the storage of the filled special sacks (2) in a plane.

3. The transport device (10) according to claim 2,
**characterized in**
**that** the filled special sacks (2) can be transferred from the intermediate storage unit (15) directly to the stacking unit (110) of the stacking region (105) or to the conveying unit (13) in the conveying path (3).

4. The transport device (10) according to any one of the preceding claims, **characterized in**
**that** a control unit (30) is provided, by means of which a need for filled special sacks (2) in the stacking region (105) can be detected, in particular,
**that** the control unit (30) can be designed in such a manner that the need for filled special sacks (2) can be triggered, if a predefined target parameter is reached in the stacking region (105).

5. The transport device (10) according to any one of the preceding claims 2 to 4, **characterized in**
**that** a sensor unit (31) is arranged on the conveying unit (13) and/or on the intermediate storage unit (15), by means of which the filled special sacks (2) can be detected and/or
**that** the provision unit (14), the conveying unit (13) and/or the intermediate storage unit (15) comprises a conveyor belt and/or a roller conveyor.

6. The transport device (10) according to any one of the preceding claims, **characterized in**
**that** the provision unit (14) has a circulating conveying means, in particular, wherein the provision unit (14) comprises a feed region (20) for receiving the filled special sacks (2) and at least one first dispensing region (21) for transferring the filled special sacks (2) into the conveying path (3) or
**that** the provision unit (14) has at least one first dispensing region (21) and one second dispensing region (22), in particular wherein special sacks (2) of a first format, filled at the first dispensing region (21), can be introduced into the conveying path (3) and special sacks (2) of a second format and/or of the first format, filled at the second dispensing region (22), can be introduced into a further conveying path (3').

7. A system (100) for stacking filled sacks (1, 2), having a feed station (101), by means of which filled standard sacks (1) can be introduced into a conveying path (3) for conveying the filled standard sacks (1) from the feed station (101) to a stacking region (105),
a transport device (10), which is arranged on the feed station (101), so that at least one part of the conveying path (3) is formed by a conveying unit (13) of the transport device (10),
and a stacking unit (110) arranged on the transport device (10), by means of which the sack stack (6) can be created,
wherein the transport device (10) has a provision unit (14), from which filled special sacks (2) can be introduced into the conveying path (3), so that the sack stack (6) consisting of filled standard sacks (1) and filled special sacks (2) can be created in the stacking region (105),
**characterized in**
**that** a special feed station (104) is arranged on the provision unit (14) for filling previously unfilled special sacks (2), which in comparison to the standard sacks have a modified format, and for introducing the filled special sacks (2) into the provision unit (14).

8. The system (100) according to claim 7,
**characterized in**
**that** the feed station (101) has a filling device (118), by means of which previously unfilled standard sacks (1.1) can be filled.

9. The system (100) according to any one of the preceding claims,
**characterized in**
**that** the transport device (10) has a least one further conveying unit (13.1), on which at least one further stacking unit (120) for creating a further sack stack (6') can be arranged and/or
**that** at least one further feed station (102), by means of which secondary sacks (1') can be filled, and/or at least one further stacking unit (120) for creating a further sack stack (6') is arranged on the transport device (10), in particular, on a further conveying unit (13.1).

10. The system (100) according to any one of the preceding claims,
**characterized in**
**that** the transport device (10) and/or the stacking unit (110) has a control unit (30), by means of which a need for filled special sacks (2) in the stacking region (105) can be detected.

11. The system (100) according to any one of the preceding claims,
**characterized in**
**that** the stacking unit (110) has a turning means (111), by means of which the sack stack (6) can be rotated in such a manner that a previously uppermost layer of the sack stack (6) forms a lowermost layer of the sack stack (6) after rotation by the turning means (111) and/or
**that** the stacking unit (110) has a wrapping device (112), by means of which the sack stack (6) can be wrapped at least partially with a film (7), in particular a stretch hood.

12. The system (100) according to any one of the preceding claims,
**characterized in**
**that** the stacking unit (110) has a sliding device (113), by means of which a part of the conveying path (3) is formed, wherein the sliding device (113) has a slide (114), by means of which the filled sacks (1, 2) can be conveyed from a sliding surface (115) onto a sliding table (116).

13. A method (200) for stacking filled sacks (1, 2) to form a sack stack (6), comprising the following steps:
- introducing (202) filled standard sacks (1) into a conveying path (3) for conveying the filled standard sacks (1) from a feed station (101) to a stacking region (105),
- transporting (203) the filled standard sacks (1) along a part of the conveying path (3) to the stacking region (105) by means of a transport device (10) according to any one of claims 1 to 6,
- forming (204) a first layer (L1) consisting of at least two rows of filled standard sacks (1) in the stacking region (105),
- forming (205) at least one second layer (L2) consisting of at least two rows of filled standard sacks (1) on the first layer (L1),
**characterized in**
**that** at least the following steps are provided:
- introducing (206) at least one special sack (2) into the conveying path (3), which has a modified format in comparison to the standard sacks,
- forming (211) a special layer (LS) consisting of at least one special sack (2) in the stacking region (105).

14. The method (200) according to claim 13,
**characterized in**
**that** the method (200) comprises the following step:
- turning (213) of the formed layers (L1, L2, LS) of the sack stack (6), so that a previously uppermost layer forms a lowermost layer of the sack stack (6) after the turning and/or
**that** the special layer (LS) is formed as a last layer of the sack stack (6) and/or that the method (200) also comprises the following step:
- wrapping (212) the sack stack (6) with a film (7), in particular, wherein the sack stack (6) is partially wrapped with a stretch hood.

15. The method (200) according to any one of the preceding claims, **characterized in**
**that** the following steps are carried out:
- transporting (203.1) the filled secondary sacks (1') along a further conveying path (3') to a further stacking region (106),
- forming (204.1) a first layer (L1') consisting of at least two rows of filled secondary sacks (1') in the further stacking region (106),
- forming (205.1) at least one second layer (L2') consisting of at least two rows of filled secondary sacks (1') on the first layer (L1') of filled secondary sacks (1'),
- introducing (206.1) at least one special sack (2) into the further conveying path (3'),
- forming (211.1) a special layer (LS') consisting of at least one special sack (2) in the further stacking region (106).

16. The method (200) according to any one of the preceding claims, **characterized in**
**that** the sack stack (6) is of cuboid design and the formation of the special layer (LS) comprises arranging the filled special sacks (2) in such a manner that in each case a lifting recess (9) is produced at least on two sides (6.1), preferably on four sides of the sack stack (6) and/or
**that** the method (200) comprises the following steps:
- removal (208) of the special sack (2) from the conveying path (3),
- intermediate storage (209) of the special sack (2),
- reintroduction (210) of the special sack (2) into the conveying path (3).

17. The method (200) according to any one of the preceding claims, **characterized in**
**that** the method (200) comprises the following step:
- detecting (207) a need for at least one special sack (2),
in particular, wherein the introduction (208) and/or the reintroduction (210) of the special sack (2) is only carried out when the need has been detected.

## Revendications

1. Dispositif de transport (10) pour le convoyage de sacs remplis (1, 2), comprenant une unité de convoyage (13), grâce à laquelle au moins une partie d'un trajet de convoyage (3) pour le convoyage de sacs normaux remplis (1) peut être réalisé entre une station de chargement (101) vers une zone d'empilage (105),
dans lequel une unité de mise à disposition (14) est prévue, à partir de laquelle des sacs spéciaux remplis (2) peuvent être introduits sur le trajet de convoyage (3), de façon à ce que, dans la zone d'empilage (105), une pile de sacs (6), constituée de sacs normaux remplis (1) et de sacs spéciaux remplis (2), puisse être créée,
**caractérisé en ce que**
au niveau de l'unité de mise à disposition (14), est disposée une station de chargement spéciale (104) pour le remplissage de sacs spéciaux (2) auparavant non remplis, qui présentent, par rapport aux sacs normaux, un format modifié, et pour l'introduction des sacs spéciaux remplis (2) dans l'unité de mise à disposition (14).

2. Dispositif de transport (10) selon la revendication 1,
**caractérisé en ce que**
une unité d'entreposage (15) est prévue, dans laquelle les sacs spéciaux remplis (2) peuvent être stockés, dans lequel l'unité d'entreposage (15) est disposée au niveau de l'unité de convoyage (13) de façon à ce que les sacs spéciaux remplis (2) puissent être introduits dans l'unité d'entreposage (15) à partir du trajet de convoyage (3), plus particulièrement **en ce que** l'unité d'entreposage (15) est conçue pour le stockage des sans spéciaux remplis (2) dans un plan.

3. Dispositif de transport (10) selon la revendication 2,
**caractérisé en ce que**
les sacs spéciaux remplis (2) peuvent être transférés de l'unité d'entreposage (15) directement vers une unité d'empilage (110) de la zone d'empilage (105) ou vers l'unité de convoyage (13) sur le trajet de convoyage (3).

4. Dispositif de transport (10) selon l'une des revendications précédentes,
**caractérisé en ce que**
une unité de commande (30) est prévue, qui permet de détecter un besoin en sacs spéciaux remplis (2) dans la zone d'empilage (105), plus particulièrement **en ce que** l'unité de commande (30) est conçue de façon à ce que le besoin en sacs spéciaux remplis (2) puisse être détecté lorsqu'un paramètre de consigne prédéfini est atteint dans la zone d'empilage (105).

5. Dispositif de transport (10) selon l'une des revendications précédentes 2 à 4,
**caractérisé en ce que**
au niveau de l'unité de convoyage (13) et/ou au niveau de l'unité d'entreposage (15), est disposée une unité de capteur (31) qui permet de détecter les sacs spéciaux remplis (2) et/ou **en ce que** l'unité de mise à disposition (14), l'unité de convoyage (13) et/ou l'unité d'entreposage (15) comprend une bande de transport et/ou un convoyeur à galets.

6. Dispositif de transport (10) selon l'une des revendications précédentes,
**caractérisé en ce que**
l'unité de mise à disposition (14) comprend un moyen de convoyage circulaire, plus particulièrement dans lequel l'unité de mise à disposition (14) comprend une zone de chargement (20) pour le logement des sacs spéciaux remplis (2) et au moins une première zone de dépôt (21) pour le transfert des sacs spéciaux remplis (2) vers le trajetd e convoyage (3) ou **en ce que** l'unité de mise à disposition (14) comprend au moins une première zone de dépôt (21) et une deuxième zone de dépôt (22), plus particulièrement dans lequel, au niveau de la première zone de dépôt (21) des sacs spéciaux remplis (2) d'un premier format peuvent être introduits dans le trajet de convoyage (3) et au niveau de la deuxième zone de dépôt (22), des sacs spéciaux remplis (2) d'un deuxième format et/ou du premier format peuvent être introduits dans un autre trajet de convoyage (3').

7. Système (100) pour l'empilage de sans remplis (1, 2), comprenant
une station de chargement (101) grâce à laquelle des sacs normaux remplis (1) peuvent être introduits dans un trajet de convoyage (3) pour le convoyage des sacs normaux remplis (1) de la station de chargement (101) vers une zone d'empilage (105),
un dispositif de transport (10) qui est disposé au niveau de la station de chargement (101), de façon à ce qu'une unité de convoyage (13) du dispositif de transport (10) constitue au moins une partie du trajet de convoyage (3),
et une unité d'empilage (110) disposée au niveau du dispositif de transport (10), qui permet de créer un empilement de sacs (6),
dans lequel
le dispositif de transport (10) comprend une unité de mise à disposition (14) grâce à laquelle des sacs spéciaux remplis (2) peuvent être introduits dans le trajet de convoyage (3) de façon à ce que, dans la zone d'empilage (105), l'empilement de sacs (6), constitué de sacs normaux remplis (1) et de sacs spéciaux remplis (2), puisse être créé,
**caractérisé en ce que**
au niveau de l'unité de mise à disposition (14), est disposée une station de chargement spéciale (104) pour le remplissage de sacs spéciaux auparavant non remplis (2) qui présentent, par rapport aux sacs normaux, un format modifié, et pour l'introduction des sacs spéciaux remplis (2) dans l'unité de mise à disposition (14).

8. Système (100) selon la revendication 7,
**caractérisé en ce que**
la station de chargement (101) comprend un dispositif de remplissage (118) qui permet de remplir des sacs normaux auparavant non remplis (1.1).

9. Système (100) selon l'une des revendications précédentes,
**caractérisé en ce que** le dispositif de transport (10) comprend au moins une unité de convoyage (13.1) au niveau de laquelle peut être disposée une autre unité d'empilage (120) pour la création d'un autre empilement de sacs (6') et/ou
**en ce qu'**au moins une autre station de chargement (102), qui permet de remplir des sacs secondaires (1') et/ou au moins une autre unité d'empilage (120) pour la création d'un autre empilement de sacs (6') est disposée au niveau du dispositif de transport (10), plus particulièrement au niveau d'une autre unité de convoyage (13.1).

10. Système (100) selon l'une des revendications précédentes,
**caractérisé en ce que** le dispositif de transport (10) et/ou l'unité d'empilage (110) comprend une unité de commande (30) qui permet de détecter un besoin en sacs spéciaux remplis (2) dans la zone d'empilage (105).

11. Système (100) selon l'une des revendications précédentes,
**caractérisé en ce que**
l'unité d'empilage (110) comprend un moyen de retournement (111) qui permet de faire tourner l'empilement de sacs (6) de façon à ce qu'une couche auparavant supérieure de l'empilement de sacs (6) constitue, après la rotation par le moyen de retournement (111), une couche inférieure de l'empilement de sacs (6) et/ou
l'unité d'empilage (110) comprend un dispositif d'enveloppement (112) qui permet d'envelopper l'empilement de sacs (6) au moins partiellement avec un film (7), plus particulièrement une housse extensible.

12. Système (100) selon l'une des revendications précédentes,
**caractérisé en ce que**
l'unité d'empilage (110) comprend une unité de coulissement (113) qui permet de former une partie du trajet de convoyage (3), dans lequel le dispositif de coulissement (113) comprend un coulisseau (114) qui permet de convoyer les sacs remplis (1, 2) d'une surface de coulissement (115) vers une table de coulissement (116).

13. Procédé (200) pour l'empilage de sacs remplis (1, 2) en un empilement de sacs (6), comprenant les étapes suivantes :
- introduction (202) de sacs normaux remplis (1) dans un trajet de convoyage (3) pour le convoyage des sacs normaux remplis (1) d'une station de chargement (101) vers une zone d'empilage (105),
- transport (203) des sacs normaux remplis (1) le long d'une partie du trajet de convoyage (3) vers la zone d'empilage (105) par un dispositif de transport (10) selon l'une des revendications 1 à 6,
- formation (204) d'une première couche (L1) constituée d'au moins deux rangées de sacs normaux remplis (1) dans la zone d'empilage (105),
- formation (205) d'au moins une deuxième couche (L2) constituée d'au moins deux rangées de sacs normaux remplis (1) sur la première couche (L1), **caractérisé en ce que**
au moins les étapes suivantes sont prévues :
- introduction (206) d'au moins un sac spécial (2) qui présente, par rapport aux sacs normaux, un format modifié, dans le trajet de convoyage (3),
- formation (211) d'une couche spéciale (LS) constituée d'au moins un sac spécial (2) dans la zone d'empilage (105).

14. Procédé (200) selon la revendication 13,
**caractérisé en ce que**
le procédé (200) comprend l'étape suivante :
- retournement (213) des couches réalisées (L1, L2, LS) de l'empilement de sacs (6) de façon à ce qu'une couche auparavant supérieure constitue, après le retournement, la couche inférieure de l'empilement de sacs (6) et/ou la couche spéciale (LS) est conçue comme une dernière couche de l'empilement de sacs (6) et/ou
le procédé (200) comprend en outre l'étape suivante :
- enveloppement (212) de l'empilement de sacs (6) avec un film (7), plus particulièrement dans lequel l'empilement de sacs (6) est enveloppé partiellement avec une housse extensible.

15. Procédé (200) selon l'une des revendications précédentes,
**caractérisé en ce que**
les étapes suivantes sont exécutées :
- transport (203.1) de sacs secondaires remplis (1') le long d'un autre trajet de convoyage (3') vers une autre zone d'empilage (106),
- formation (204.1) d'une première couche (L1') à partir d'au moins deux rangées de sacs secondaires remplis (1') dans l'autre zone d'empilage (106),
- formation (205.1) d'au moins une deuxième couche (L2') à partir d'au moins deux rangées de sacs secondaires remplis (1') sur la première couche (L1') de sacs secondaires remplis (1'),
- introduction (206.1) d'au moins un sac spécial (2) dans l'autre trajet de convoyage (3'),
- formation (211.1) d'une couche spéciale (LS') à partir d'au moins un sac spécial (2) dans l'autre zone d'empilage (106).

16. Procédé (200) selon l'une des revendications précédentes,
**caractérisé en ce que**
l'empilement de sacs (6) présente une forme parallélépipédique et la formation de la couche spéciale (LS) comprend une disposition des sacs spéciaux remplis (2) telle que, au moins sur deux cotés (6.1), de préférence sur chacun des quatre côtés de l'empilement de sacs (6), apparaît un évidement de levage (9) et/ou
le procédé (200) comprend les étapes suivantes :
- retrait (208) du sac spécial (2) du trajet de convoyage (3),
- entreposage (209) du sac spécial (2),
- réintroduction (210) du sac spécial (2) dans le trajet de convoyage (3).

17. Procédé (200) selon l'une des revendications précédentes,
**caractérisé en ce que**
le procédé (200) comprend l'étape suivante :
- détection (207) d'un besoin en au moins un sac spécial (2), plus particulièrement dans lequel l'introduction (208) et/ou la réintroduction (210) du sac spécial (2) n'est effectuée que si le besoin a été détecté.
